Europäisches Patentamt

European Patent Office

Office européen des brevets

(19)

(11) **EP 1 459 810 A1**

(12) # EUROPEAN PATENT APPLICATION

(43) Date of publication:
**22.09.2004 Bulletin 2004/39**

(51) Int Cl.[7]: **B05D 1/18**, B05D 5/06,
C08F 20/06, C08F 2/48,
C08F 265/02, G02B 1/11

(21) Application number: **04006364.6**

(22) Date of filing: **17.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **18.03.2003 JP 2003073336
13.05.2003 JP 2003134356
21.05.2003 JP 2003143429**

(71) Applicant: **Fuji Photo Film Co., Ltd.
Kanagawa (JP)**

(72) Inventors:
• **Kawamura, Koichi**
  **Haibara-gun Shizuoka-ken (JP)**
• **Kano, Takeyoshi**
  **Haibara-gun Shizuoka-ken (JP)**

(74) Representative: **HOFFMANN - EITLE
Patent- und Rechtsanwälte
Arabellastrasse 4
81925 München (DE)**

(54) **Thin film laminated with single particle layer and production method of the same**

(57)    The thin film laminated with a single particle layer of the present invention includes: a support having a surface where a hydrophilic graft polymer chain is present; and a single particle layer composed of fine particles adhered to the support in the single particle state. This thin film laminated with a single particle layer can be produced by providing a particle-containing liquid or the like onto a support having a surface where a hydrophilic graft polymer chain is present; and allowing fine particles to two-dimensionally aggregate while controlling development thickness of the fine particle-containing liquid, thereby forming a single particle layer. The invention provides a high quality thin film laminated with a single particle layer composed of functional fine and provided on the surface, and its production method.

EP 1 459 810 A1

**Description**

BACKGROUND OF THE INVENTION

Field of the Invention

The present invention relates to a thin film laminated with a single particle layer which is made of two-dimensionally aggregated fine particles adsorbed in the form of a single particle and a method for producing the same, and more specifically, to a method for producing a novel two-dimensional particle thin film which is useful for producing new functional material in electronics, biomaterial, and other fields, and in particular, to a thin film having a single particle layer arrayed two dimensionally.

The invention also relates to an optical film and a production method of the same as an application of the novel two-dimensional particle thin film.

Description of the Related Art

"A thin film laminated with a single particle layer" requests indicates a thin film having a single particle layer arranged in a state of being densely filled in a form of single layer and in a two dimensional manner onto a surface of a support base member, and may be hereinafter referred to as a single particle film.

The single particle film is useful and expected to be used for various applications in the fields of high-performing catalysts, high-performing sensors, high-performing transducers; optical materials such as interference thin films, antireflection films, two-dimensional multi-lenses for fine particles, light control films, coloring films, and ink-proof films; electronic materials such as conductive films, films for electromagnetic interruption, LSI substrates, solid elements of semiconductor lasers, optical recording media, and magnetic recording media; photographic materials such as highly photosensitive paper; selective transmittance; molecular sieve films; and selective adsorption.

Methods for producing an arbitrary thin particle layer on a support include spin coating, coating, and dipping which have been in the actual use. However, in the methods for producing a particle layer onto the support surface by the spin coating, coating, dipping and the like, it is difficult to achieve a desired thin film thickness, a desired number of layers, and a desired particle density with precision. Further, it is difficult to control all of these conditions at the same time.

On the other hand, as methods for forming a layer similar to a thin single particle layer using fine particles, a method for forming a single particle film using particle assembly (convective assembly) which makes use of a flow of particles in a water film, and other methods are known (See Japanese Patent application Laid- open (JP-A) Nos. 7-116502, 8-155378, 8-229474, and 9-92617, for example).

These approaches are known as Langmuir-Blodgett film formation method (which is hereinaf ter referred to as LB method) . In this method of forming a single particle film by particle assembly (convective assembly) where a water film is formed on a support surface to utilize a flow of particles in the water film, the evaporation of a solvent (including water) transfers and arrays the particles, making use of the independent assembling force of each particle. This, however, has problems in that a precision device is required to control the evaporating conditions of the solvent and that it takes too long to form the single particle film.

Furthermore, the LB method is a method for forming a thin film by developing amphipathic material dissolved in an organic solvent onto a water-base medium surface, applying a surface pressure to generate a single molecule film onto the water-base medium surface, and copying this film onto the substrate surface, thereby forming a multi-layered film. And the execution of this method requires high precision, with a precision device having a vibration-proofing structure.

Of these methods, convective assembly is said to be particularly excellent; however, executing this method requires forming a hydrophilic surface necessary for convective assembly, and forming a uniform water film onto the hydrophilic surface to control the evaporation of its water-based components. Unless these conditions are achieved, it is difficult to control a film of arrayed fine particles.

In order to overcome this problem, a method for forming a water film useful for regularly arraying fine particles and a device for achieving it have been proposed (See Japanese patent Application Laid-Open (JP-A) Nos. 7-116502 and 9-92617, for example). Although this method has made possible the formation of a precision thin film, there is still a large problem that it is impossible to apply this method to mass production because of the low rate of the thin film formation, the complexity of the device, and the difficulty in evaporation control (problem 1).

In the aforementioned thin film laminated with a single particle layer, a thin film having two-dimensionally aggregated fine particles adsorbed in the form of a single particle layer only in a predetermined pattern region of the thin film, that is, a thin film laminated with a single particle layer as a pattern material with a single particle layer selectively formed in a specific region, is useful as optical materials such as antireflection films or light-scattering films.

As methods for producing such an arbitrary thin particle layer onto a support, there have been suggested particle aggregation methods in which a liquid thin film is formed by developing a liquid dispersion medium of fine particles onto a substrate, and then the liquid thickness of the liquid dispersion medium is decreased to make it the same as or smaller than the particle size, so as to aggregate the fine particles using the surface tension (See Japanese Patent No. 2828374, for example) . This invention has enabled a layer of fine particles to be aggregated regularly and arrayed uniformly; however, it is still difficult to array fine particles in the form of a pattern in a desired region.

As the prior art of arraying fine particles in the form of a pattern, there is a described method in which a hydrophilic-and-hydrophobic pattern is formed on a surface of the oxide substrate such as $TiO_2$ by irradiating the substrate surface with patterned light so as to array the fine particles according to the pattern (See Japanese Patent Application Laid-Open (JP-A) No. 2002-273209, for example). Although this method has enabled the formation of a particle pattern, it is not easy to set conditions required for the formation of a regular pattern, and fine particles tend to adhere in regions other than the pattern in which fine particles are to adhere. Therefore, a method for forming a pattern with high selectivity has been demanded.

As another method for arraying fine particles in the form of a pattern, a method for laminating fine particles in the form of a pattern using a microstamp is known (See G. M. Whitesides et al., "Advanced Materials", volume 8, 1996, page 245, for example). This method can assemble polymer particles of submicron size in good order. Furthermore, this method is a pattern formation method with high selectivity with no particle adhesion in regions other than the pattern.

However, this method is hard to operate, and the formation of particle lamination in good order requires meticulously controlling the evaporation rate of solvent, which is far from simple formation. This results in an another problem that this method is unsuitable for the pattern formation in mass production or in a large area (problem 2).

In addition, the optical film and its production method as an application example of the aforementioned novel two-dimensional particle thin film has the following developments and problems resulted from them.

In recent years, displays of LCDs, EL, and FEDs have been developed, and in particular, LCDs have come to be used in various fields including PCs and portable terminals. LCDs are classified into reflection and transmission types, depending on the method of taking light in for the irradiation of the liquid crystal panel. In the reflection type, a reflection plate laminated with a highly reflective aluminum film is disposed the back surface of the liquid crystal panel. The light incident from front surface of the display is reflected by the reflection plate to irradiate the liquid crystal panel so as to obtain liquid crystal image. In the transmission type, a backlight unit disposed on the back surface of the liquid crystal panel illuminates the liquid crystal panel.

In the reflection type, in order to reduce the deterioration of contrast caused by the ground color of aluminum, a member for properly scattering light is disposed between the liquid crystal panel and the reflection plate so as to make the background color close to white, thereby improving the contrast of image.

In the transmission type, for the purpose of reducing the deterioration of visibility due to the print pattern of the acrylic light-guide plate which composes the backlight unit and obtaining uniform plane-like light, a member for scattering light is disposed between the liquid crystal panel and the backlight unit.

Thus, LEDs need a light scattering member having desired light scattering properties in both the reflection types and the transmittance types. The light scattering members include well known members such as internal light scattering members which scatter light inside a resin layer composed of light transmissive resin matrix and is produced by scattering light transmissive fine particles having a refractive index different from the light transmissive resin in the resin layer; external light scattering members which scatter light due to formation of a light transmissive resin film therein and thereafter roughing of its surface to form asperities thereon; and internal/external light scattering members which scatter light both inside and outside by making some of the light transmissive fine particles project to the surface in the formation of a light transmissive resin film, thereby forming asperities on the surface, and utilizing the scattering due to the shining transmitting fine particles inside the film and the scattering due to the surface asperities.

These general light scattering members have obtained light scatting properties and light transmission properties to some extent. However, for example, in the internal light scattering member, the light transmissive fine particles are dispersed at random in the transparent resin composing the internal light scattering member, so that when the light rays pass through the transparent resin, they pass through plural light transmissive fine particles in the direction of film thickness, causing light scattering every time they pass through fine particles. This results in a decrease in light transmission properties.

Furthermore, in the external light scattering member and internal/external light scattering member, it is difficult to have uniform asperities on the surface, which makes the light scattering uneven. Further, the presence of the asperities on the surface causes another problem in that it is difficult to remove stains.

As a method for solving these problems, optical films which includes a single particle layer made of light transmissive fine particles disposed between two light transmissive resin layers have been proposed (See Japanese Patent Application Laid-Open(JP-A) No. 2002-311214, for example). In these films, incident light passes through the light transmissive fine particles arrayed in the form of a single layer only once, without causing a plural number of times of light scattering that reduces the light transmission properties which has been a problem in the conventional internal scattering members, and the provision of the smooth surface can achieve high light transmission properties and uniform light scattering properties. The optical films have been valued to some extent.

As a method for producing such an optical film, it is generally conducted to form a uniform single particle layer onto a surface of a light transmissive resin layer, and to form another light transmissive resin layer onto the single particle layer. However, it is difficult to form a uniform single particle layer in high density. For example, a uniform single particle layer as desired cannot be obtained by methods such as coating light transmissive fine particles dispersed in an appropriate solvent; spraying light transmissive fine particles with an air spray; and transferring light transmissive fine particles from a brush or roll having the fine particles thereon. Thus, an optical film having desired light scatting properties has not been obtained yet (problem 3).

SUMMARY OF THE INVENTION

In view of the aforementioned prior art drawbacks (problems 1 to 3 mentioned above) , a first object of the present invention is to provide a high-quality thin film laminated with a single particle layer in which functional fine particles are provided in the form of a single layer on its surface. A second object of the invention is to provide a method for producing a novel thin film laminated with a single particle layer, capable of producing a high-quality thin film laminated with a single particle layer quickly and in a large area by controlling the aggregation of the fine particles.

A third object of the invention is to provide a thin film laminated with a single particle pattern layer of high selectivity and high quality, in which functional fine particles are provided in the form of a single layer with a desired pattern on the surface of the thin film. A fourth object of the invention is to provide a method for producing a novel thin film laminated with a single particle layer, capable of producing a thin film laminated with a single particle pattern layer of high selectivity and high quality through a quick and simple operation and in a large area by controlling the aggregation of the fine particles.

A fifth object of the invention is to provide an optical film having high light transmission properties and uniform light scattering properties, which is useful for a display in LCDs, EL, FEDs; free from uneven intensities, and provides images excellent in contrast. A sixth object of the invention is to provide a method for producing a novel optical film, capable of producing the high-quality optical film with ease and in a large area.

As a result of focusing attention on the properties of a base member having a hydrophilic graft polymer on its surface and having continued studying them, the inventor of the present invention have discovered that use of a support having a hydrophilic graft surface solves the problem 1 and achieves the first and second objects, and achieved the present invention based on the discovery.

In a first feature of the invention, a thin film laminated with a single particle layer comprising: a support having a surface where a hydrophilic graft polymer chain is present; and

a single particle layer composed of fine particles adhered to the support in a single particle state.

In a second feature of the invention, a method for producing a thin film laminated with a single particle layer, comprising the steps of:(a) providing a fine particle-containing liquid onto a support having a surface where a hydrophilic graft polymer chain is present;and (b) allowing fine particles to two-dimensionally aggregate while controlling development thickness of the fine particle-containing liquid, thereby forming a single particle layer.

Although the effect of the thin film laminated with a single particle layer based on the first feature has not been clarified yet, it is assumed that the excellent hydrophilicity of the hydrophilic graft polymer surface and its water-retaining effect effectively act particularly on the particle assembly using convective assembly.

In other words, according to the first feature, a uniform surface having high hydrophilicity is formed on the support because of the presence of a hydrophilic graft polymer chain therein. Developing liquid containing functional fine particles on it can, for example, reduce the occurrence of uneven particle aggregation resulting from the presence of a region where moisture is lost in parts, thereby making the two-dimensional aggregation of the fine particles proceed in a uniform manner. This seems to be the reason why the thin film laminated with a single particle layer in which fine particles are arrayed regularly are formed.

According to the method based on the second feature, the properties of this highly hydrophilic surface are utilized. As a result, without using a specially controlled method or device which used to be essential in the execution of the conventional BM method, it becomes possible to form a single particle layer with ease by coating and drying particle-containing liquid, allowing the single particle layer to be applied to a large area.

As a result of focusing attention on the properties of the base member having a hydrophilic graft polymer on its surface and having continued studying them, the inventors of the present invention have discovered that use of a support having a hydrophilic graft surface provided in the form of a pattern solves the problem 2 and achieves the third and fourth objects, and achieved the present invention based on the discovery.

Specifically, in the third feature of the invention, a thin film laminated with a single particle pattern layer comprising: a support having a surface where a hydrophilic graft polymer chain is present in a patterned manner; and a single particle layer composed of fine particles adhered in a single particle state in a region of the support where the hydrophilic graft polymer chain is present.

Further, in the fourth feature of the invention, a method for producing a thin film laminated with a single particle pattern layer, comprising the steps of: (a) providing a fine particle-containing liquid onto a support having a surface where a hydrophilic graft polymer chain of patterned configuration is present; and (b) allowing fine particles to two-dimensionally aggregate while controlling development thickness of the fine particle-containing liquid, thereby forming a single particle layer in a region where the hydrophilic graft polymer chain is present.

Although the effect of the thin film laminated with a single particle pattern layer based on the third feature has not been clarified yet, it is assumed that the excellent hydrophilicity of the hydrophilic graft polymer surface and its water-retaining effect effectively act particularly on the particle assembly using convective assembly.

Therefore, according to the third feature of the invention, a uniform pattern surface having high hydrophilicity (surface hydrophilic region) due to the presence of a hydrophilic graft polymer chain of patterned configuration thereon is formed on the support. Developing liquid containing functional fine particles on it can, for example, reduce the occurrence of uneven particle aggregation resulting from the presence of a region where moisture is lost in parts, thereby making the two-dimensional aggregation of the fine particles proceed in a uniform manner. This seems to be the reason why the thin film laminated with a single particle layer, in which fine particles are arrayed regularly with no unevenness, is formed only in the hydrophilic region of patterned configuration.

Further, according to the method of the fourth feature, the properties of the aforementioned highly hydrophilic surface are utilized. As a result, without using a specially controlled method or device which used to be essential in the execution of the conventional convective assembly method, it becomes possible to form a thin film with ease in a predetermined pattern region by coating and drying particle-containing liquid, allowing the thin film to be applied to a large area.

As a result of focusing attention on the properties of a base member having a hydrophilic graft polymer on its surface and having continued studying them, the inventors of the present invention have discovered that use of a light transmissive support having a hydrophilic graft surface, as the support of an optical film, solves the problem 3 and achieves the fifth and sixth objects, and achieved the present invention based on the discovery.

In other words, in the fifth feature of the invention, the optical film comprises: a light transmissive support having a surface where a hydrophilic graft polymer chain is present; a single particle layer which is composed of light transmissive fine particles and is provided on the support; and a light transmissive resin layer provided on the single particle layer.

Further, in the sixth feature of the invention, a method for producing an optical film, comprising the steps of: (a) providing a liquid containing light transmissive fine particles onto a light transmissive support having a surface where a hydrophilic graft polymer chain is present; (b) allowing the light transmissive fine particles to two-dimensionally aggregate while controlling development thickness of the liquid containing light transmissive fine particles, thereby forming a single particle layer; and (c) providing a light transmissive resin layer on the single particle layer.

The light transmissive fine particles used in the fifth and sixth features preferably have a refraction index which is different from at least that of one of the light transmissive support and the light transmissive resin layer for the purpose of obtaining desired light scattering.

Although the effect of the optical film based on the fifth feature has not been clarified yet, it assumed that the excellent hydrophilicity of the hydrophilic graft polymer surface and its water-retaining effect effectively act particularly on the particle assembly using convective assembly.

The assumed mechanism of the optical film is identical to the mechanism explained about the first to fourth features, so its detailed description will be omitted.

In short, in the optical film of the fifth feature including the single particle layer between the support and the light transmissive resin layer, as described above, the incident light passes through the fine particles only once, causing no extra light scattering. In addition, the absence of asperities on the surface unlike the external light scattering member and the internal/external light scattering member presumably achieves the high transmission properties and uniform light scattering properties.

As a result, displays of LCDs, EL, and FEDs utilizing such an optical film do not suffer from uneven intensities, and are expected to provide images excellent in contrast.

DETAILED DESCRIPTION OF THE INVENTION

The embodiments of the invention will be described in detail as follows.

[First Embodiment]

The thin film laminated with a single particle layer of the present embodiment comprises a support having a surface where a hydrophilic graft polymer chain is present; and a single particle layer composed of fine particles adhered to the support in a single particle state. The thin film laminated with a single particle layer can be formed by developing liquid for forming a particle layer onto the support surface where a graft polymer chain having a hydrophilic group is present, and two-dimensionally aggregating the contained fine particles, while controlling development thickness of the liquid by making use of a convective assembly phenomenon.

The following is an explanation of convective assembly which is a basic technique for the production of the thin film laminated with a single particle layer of the present embodiment.

Convective assembly is a method for forming a single particle film or multi particle films on a flat substrate with a surface having an affinity with a solvent such as glass, including the steps of soaking the substrate in a suspension solution with fine particles dispersed therein (a dispersant solution using a water-based solvent, for example), and controlling the concentration of the fine particles, the rate of raising, and other conditions, thereby forming a film on the substrate.

This convective assembly makes use of a phenomenon that fine particles are carried by the water flow resulting from water evaporation, and the formation of a uniform single particle layer by applying this method has at least two prerequisites that a uniform liquid film is formed on the substrate surface and that the substrate is sufficiently slippery to allow the fine particles to move around in the narrow space. This is described in detail in "The Nature and Science of Self-assembling" written by Kuniaki Nagayama, published by Maruzen, 1997.

Furthermore, for particles to transfer across the liquid film formed on the substrate surface and self-assemble, two forces of lateral capillary force derived from surface tension and a stress due to the liquid flow caused by the evaporation of the liquid film are necessary. And unless these forces act in good balance, it is difficult to quickly form a uniform fine particle array; conventionally, a special device is used to balance these two stresses as mentioned in the prior art section above.

In the method of the present embodiment, the use of the support having a surface where a hydrophilic graft polymer chain having high hydrophilicity is present achieves the formation of a stable wetting film (liquid film), which is one of the requirements to cause convective assembly. This enables the fine particles to move freely in the liquid film or on the liquid film surface without damaging the stress to be given to the fine particles by the particle assembling force and the lateral capillary force resulting from the liquid flow in the liquid film, making it possible to easily obtain a thin film laminated with a single particle layer by a coating process, without a special device.

This property presumably results from the high motility of the graft polymer chain in the graft hydrophilic film. In other words, the hydrophilic graft polymer chain is bonded at one terminal with the support; however, the other terminal, that is, the terminal having the hydrophilic functional group is free, which produces high motility and water-retaining properties.

Therefore, forming a graft hydrophilic film by using the surface where a hydrophilic graft polymer chain is present seems to facilitate the formation and control of a uniform liquid film which has been difficult so far, and to enable a single particle layer to be formed without a precision device for the liquid film control which is conventionally necessary.

The structure of the thin film laminated with a single particle layer of the present embodiment will be described as follows.

<The support having a surface where a hydrophilic graft polymer chain is present>

The aforementioned surface of the support in the present embodiment indicates a highly hydrophilic surface where a hydrophilic graft polymer chain is present, which will be hereinafter referred to as a hydrophilic surface. Such a hydrophilic surface can be a support surface with which a hydrophilic graft polymer chain is directly bonded or a support surface on which an intermediate layer bondable with a graft polymer is formed, with a hydrophilic polymer being grafted to the intermediate layer.

Furthermore, the hydrophilic surface in the present embodiment can be formed on the surface of the support, by coating or coating-and-linking, using a polymer having a hydrophilic graft polymer chain bonded with a trunk polymer compound, a polymer having a hydrophilic graft polymer chain bonded with a trunk polymer compound and having a cross-linkable function group introduced thereto, or using a composite containing a hydrophilic polymer having a cross-linkable group at a terminal thereof and a cross-linking.

The hydrophilic graft polymer chain of the present embodiment is a structure where one terminal of the polymer is bonded directly to the support surface or to the intermediate layer formed on the support surface, and the graft chain part showing hydrophilicity is not substantially cross-linked. Due to this structure, the motility of the polymer portion showing hydrophilicity can avoid being restricted or embedded in the strongly cross-linked structure, whereby high motility thereof can be maintained. This seems to be the reason for the high hydrophilicity and excellent formation of the liquid film on this surface, which advantageously acts on the particle assembly.

The molecular weight of such a hydrophilic graft polymer chain is in a range of Mw 500 to 5, 000, 000, preferably in a range of Mw 1,000 to 1, 000, 000, and more preferably in a range of Mw 2,000 to 500,000.

In the present embodiment, (a) one in which a hydrophilic graft polymer chain is bonded with the support surface directly or with the intermediate layer formed on the support surface is referred to as "surface graft", and (b) one in which a hydrophilic graft polymer chain is introduced in a polymer cross-linked film structure is referred to as a "cross-linked hydrophilic layer adopting a hydrophilic graft chain". In the present embodiment, a support or a member provided with an intermediate layer having a support thereon is referred to as a "base member".

A method for forming the aforementioned hydrophilic surface will be described as follows.

[(a) Method for producing a surface graft]

Methods for producing a surface having a hydrophilic group composed of a graft polymer on the base member include two methods: bonding the base member and the graft polymer by chemical bonding; and polymerizing a compound having a polymerizable double bond using the base member as a starting point, thereby producing a graft polymer.

(Method for bonding the base member and the graft polymer by chemical bonding)

The following is an explanation of a method for bonding the base member and the graft polymer by chemical bonding.

In this method, grafting of a polymer can be caused by making a chemical reaction between a functional group on the polymer and a functional group on the base member surface, wherein the polymer has the functional group reacting with the base member at a terminal or a side chain thereof.

Although there is no particular limitation on the functional group to be reacted with the base member as long as it is reacted with the functional group on the base surface. Examples thereof include a silane coupling group such as an alkoxy silane, an isocyanate group, an amino group, a hydroxyl group, a carboxyl group, a sulfone group, a phosphate group, an epoxy group, an aryl group, a methacryloyl group, an acryloyl group, and the like.

Examples of the compounds particularly useful as a polymer having a reactive functional group at a terminal or a side chain thereof inclode: a hydrophilic polymer having a trialkoxy silyl group at a terminal thereof; a hydrophilic polymer having an amino group at a terminal thereof; a hydrophilic polymer having a carboxyl group at a terminal thereof; a hydrophilic polymer having an epoxy group at a terminal thereof; and a hydrophilic polymer having an isocyanate group at a terminal thereof.

Although there is no particular limitation on the hydrophilic polymer used in the present embodiment as long as it is hydrophilic, specific examples thereof include polyacrylic acid, polymethacrylic acid, polystyrene sulfonic acid, poly-2-acrylamide-2-methylpropane sulfonic acid, salts thereof, polyacrylamide, polyvinyl acetamide, and the like. In addition, a polymer of a hydrophilic monomer used in the following surface graft polymerization or a copolymer containing a hydrophilic monomer can be used advantageously. (A method for polymerizing a compound having a polymerizable double bond using the base member as a starting point, thereby producing a graft polymer)

A method for polymerizing a compound having a double bond which can be polymerized by using the base member as a starting point, thereby producing a graft polymer is generally called a surface graft polymerization. The term, the surface graft polymerization indicates a process of bonding the base member with a compound disposed in contact with the base member by polymerization, the compound having a polymerizable double bond, by giving an active species onto the base member surface by plasma irradiation, light irradiation, heating, or the like.

The surface graft polymerization to execute the present embodiment can be conducted by any well known method described in references. For example, photo-grafting polymerization and plasma irradiation graft polymerization as the surface graft polymerization are described in Shin Kobunshi Jikkengaku 10, edited by Kobunsi Gakkai, published by Kyoritsu Shuppan Co., 1994, page 135.

Furthermore, graft polymerization using radiations such as γ-rays and electron beams is described in Kyuchaku Gijutsu Binran, supervised by Takeuchi, NTS Co., February 1999, pages 203 and 695.

Specific methods of photo-grafting polymerization are available in JP-A Nos. 63-92658, 10-296895, and 11-119413. As the plasma irradiation graft polymerization and the graft polymerization using radiations, it is possible to use the methods described in the aforementioned literature, Y. Ikeda et al., Macromolecules volume 19, page 1809 (1986), and the like.

More specifically, a polymer surface such as PET is treated by plasma or electron beams to generate radicals on the surface, and thereafter, the active surface is reacted with a monomer having a hydrophilic functional group. This results in a graft polymer surface layer, that is, a surface layer having a hydrophilic group (hydrophilic surface).

Besides the aforementioned references, the photo-grafting polymerization can be performed by applying a light polymerizable composite on the surface of the film base member, and then making it contact with a water-based radical polymer compound and applying light thereto, as described in JP-A No. 53-17407 (Kansai Paint Co., Ltd.) or JP-A No. 2000-212313 (Dainippon Ink and Chemicals, Incorporated).

The compounds useful for the formation of a hydrophilic graft polymer chain need to have a polymerizable double bond and hydrophilic properties. These compounds can be any of a hydrophilic polymer, a hydrophilic oligomer, and a hydrophilic monomer as long as it has a double bond in a molecule. The most useful compound of these is a hydrophilic monomer.

Examples of hydrophilic monomers useful in the present embodiment include positively charged monomers such as ammonium and phosphonium, and monomers which have an acid group such as a sulfonic group, a carboxyl group, a phosphoric acid group, or a phosphonic acid group, which are either negatively charged or can be dissociated with negative charge. Besides these, it is also possible to use hydrophilic monomers having a nonionic group such as a hydroxyl group, an amide group, a sulfonamide group, an alkoxy group, and a cyano group.

Examples of the hydrophilic monomer particularly useful in the present embodiment include the following monomers: (meta) acrylic acid or its alkali metal salt and amine salt; itaconic acid or its alkali metal salt and amine salt; allylamine or hydrohologenate acid salt; 3-vinylpropionic acid or its alkali metal salt and amine salt; vinyl sulfonic acid or its alkali metal salt and amine salt; styrene sulfonic acid or its alkali metal salt and amine salt; 2-sulfoethylene (meta) acrylate, 3-sulfopropylene (meta) acrylate or its alkali metal salt and amine salt; 2-acrylamide-2-methyl propane sulfonic acid or its alkali metal salt and amine salt; acid phosphoxy polyoxy ethylene glycol mono (meta) acrylate, or salts thereof; 2-dimethyl aminoethyl (meta) acrylate or its hydrogen halogenate acid salt; 3-trimethyl ammonium propyl (meta) acrylate, 3-trimethyl ammonium propyl (meta) acrylamide, or N,N,N-trimethyl-N-(2-hydroxy-3-methacryloyloxy propyl) ammonium chloride. It is also useful to use 2-hydroxyethyl (meta) acrylate, (meta) acrylamide, N-monomethylol (meta) acrylamide, N-dimethylol (meta) acrylamide; N-vinyl pyrrolidone, N-vinyl acetamide, and polyoxy ethylene glycol mono (meta) acrylate.

Besides the aforementioned photo-grafting reaction, there is another useful method for forming the surface hydrophilic graft polymer necessary in the present embodiment, which is, atom transfer radical polymerization which has been drawing attention recently as a surface graft polymerization process. Using this method enables the formation of a hydrophilic graft polymer having a hydrophilic functional group in high density and uniformly on a graft polymer surface.

This polymerization, which is described in detail in K. Matyjaszewski et al., "Polymer Preprints", 2000, volume 41, page 411; M. L. Bruening et al., "J. Am. Chem. Soc.", 2000, volume 122, page 7616; and "Macromolecules", 2002, volume 35, page 1175, can be employed for the formation of the hydrophilic surface of the present embodiment.

[(b) A method for producing a cross-linked hydrophilic layer adopting a hydrophilic graft]

The cross-linked hydrophilic layer adopting the hydrophilic graft chain of the present embodiment can be produced by forming a graft polymer by a method generally known as a synthesis of a graft polymer, and cross-linking it. To be more specific, the synthesis of a graft polymer is described in "Gurafuto Jugo to sono Oyo" written by Fumio Ide, published by Kobunsi Kankokai, 1977, and "Shin Kobunshi Jikkengaku 2, Kobunshi no Gosei/Hanno", edited by Kobunshi Gakkai, published by Kyoritsu Shuppan Co., 1995.

The synthesis of a graft polymer can basically be conducted by three different approaches: 1. polymerizing a branch monomer from a trunk polymer; 2. bonding a branch polymer with a trunk polymer; and 3. copolymerizing a branch polymer to a trunk polymer (a macromer process). Any of these three approaches can produce the hydrophilic surface of the present embodiment; however, in terms of production suitability and film structure control, "3. a macromer process" is superior to the others. The synthesis of a graft polymer using a macromer is described in the aforementioned "Shin Kobunshi Jikkengaku 2, Kobunshi no Gosei/Hanno", edited by Kobunshi Gakkai, published by Kyoritsu Shuppan Co., 1995. It is also described in greater detail in "Makuromonoma no Kagaku to Kogyo" written by Yuya Yamashita, published by IPC, 1989.

To be more specific, a hydrophilic macromer can be synthesized according to the method described in the references by using one of the hydrophilic monomers which have been described above as the organic cross-linked hydrophilic layer, such as acrylic acid, acrylamide, 2-acrylamide-2-methyl propane sulfonic acid, or N-vinyl acetamide.

One method for producing a cross-linked hydrophilic layer adopting hydrophilic graft chain after these hydrophilic macromers are synthesized includes the steps of: copolymerizing the aforementioned hydrophilic macromer with another monomer having a reactive functional group so as to synthesize a graft-copolymer, and then coating the synthesized graft-copolymer and a cross-linking agent which is to be reacted with the reactive functional group of the polymer, making them be reacted with each other by heat, thereby being cross-linked.

There is another method according to which a hydrophilic macromer and a graft polymer having a photo-crosslinkable group or a photopolymerizable group are synthesized, the synthesized macromer and the graft polymer are applied onto the support by coating, and reacted with each other by light irradiation for cross-linking.

Thus, a surface having a hydrophilic graft polymer chain (hydrophilic surface) can be provided on the base member. The film thickness of the layer which forms the hydrophilic surface can be selected depending on the application, however, in general, it is preferably in a range of 0.001 to 10 μm, and more preferably in a range of 0.01 to 5

μm, and most preferably in a range of 0.1 to 2 μm. Too large or too small a film thickness is not preferable for the formation of a liquid film which effects a convective assembly phenomenon.

[Fine particles]

The following is a description about the fine particles forming the single particle layer. There is no particular limitation on the types of the fine particles applicable to the present embodiment, and can be selected appropriately according to the intended function of the thin film laminated with a single particle layer. The size of the fine particles can also be selected depending on the application however, from the properties of the single particle layer, fine particles of nano meter or micron level are employed in general.

Examples of the material constituting the fine particles include organic polymer; natural or synthetic protein; inorganic material such as ceramic or metal; or their composite, and particularly preferable examples include inorganic fine particles such as semiconductor fine particle, $TiO_2$, or $SiO_2$; and polymeric fine particles such as polystyrene, polyacrylate, polyamide, polyurethane, or polyolefin. It is also possible to use fine particle such as synthetic or natural protein, liquid crystal micro capsule, particle whose phase can be changed by heat, depending on the application of the thin film.

The diameter of the fine particles is preferably in a range of 0.1 nm to 20 μm, more preferably in a range of 1 nm to 10 μm, and particularly preferably in a range of 5 nm to 5 μm.

The fine particles to be used can be appropriately selected according to the application of the functional surface. The diameter of the fine particles can also be selected depending on the application. In a preferable mode of the present embodiment, the fine particles are arrayed by convective assembly phenomenon so as to form a single particle layer, and the occurrence of this phenomenon greatly depends on the easiness of the transfer of the fine particles. Accordingly, it is preferable that there is no interaction between the graft polymer present on the surface and the fine particles. Therefore, fine particles causing no interaction with the hydrophilic functional group or the like of the graft polymer are selected. In particular, particles having an ionic interaction with the graft polymer are not preferable because these particles hinder the movement of the fine particles that is led by convective assembly phenomenon.

As long as the desired properties of the fine particles are not marred, it is also possible to use any fine particles which have been subjected to a surface treatment such that the interacting properties thereof with the graft polymer is reduced.

Preferable examples of the fine particles usable in the thin film laminated with a single particle layer of the present embodiment will be shown as follows however, the invention is not restricted to these examples. These functional fine particles will be explained in accordance with the functions to be provided to the single particle layer on the surface. (1-1) Fine particles for an antireflection member

When a single particle layer of the invention is used for an antireflection function, it is preferable that at least one type of a fine particle selected from a resin fine particle and a metal oxide fine particle is used as the fine particle. The use of such particles realizes a roughened surface member which: has homogeneous and excellent antireflection capability preferably used for an image display surface; enables bright images without decreasing the image contrast; and has excellent durability which makes the surface suitable to the antireflection material.

The center part of a fine particle called "core" in the case of a resin fine particle is an organic polymer. Preferable examples of the metal oxide fine particle include silica ($SiO_2$) , titanium oxide ($TiO_2$), zinc oxide (ZnO), tin oxide ($SnO_2$), and the like. It is also possible to use pigment fine particles so-called a transparent pigment or white pigment such as calcium carbonate, aluminum hydroxide, magnesium hydroxide, clay, or talc, as long as it has the preferable pattern described below.

The resin fine particle has preferably a high degree of hardness in terms of durability. Specific examples thereof include a spherical fine particle made from resin such as acrylic resin, polystyrene resin, polyethylene resin, epoxy resin, or silicon resin. Above all, a cross-linked resin fine particle is particularly preferable.

When the roughened surface member of the present embodiment is used as the antireflection material, it is preferable, from the viewpoint of effects, to set the film thickness thereof to λ/4 with respect to the wavelength (λ) of which reflection should be prevented.

1-2. Fine particles for conductive film

When the single particle layer of the present embodiment is used as a conductive film, it is preferable to use at least one type of fine particle selected from a conductive resin fine particle, a conductive or semiconductive metal fine particle, a metal oxide fine particle, and a metal compound fine particle, as the fine particle.

As a conductive metal particle or a metal oxide fine particle, conductive metal compound powder having a specific resistance value of no higher than $1 \times 10^3 \, \Omega \cdot cm$ can be used for various applications. To be more specific, it is possible to use silver (Ag), gold (Au), nickel (Ni), copper (Cu), aluminum (Al), tin (Sn), lead (Pb), zinc (Zn), iron (Fe), platinum (Pt), iridium (Ir), osmium (Os), palladium (Pd), rhodium (Rh), ruthenium (Ru), tungsten (W) , molybdenum (Mo), alloys of these materials, tin oxide ($SnO_2$), indium oxide ($In_2O_3$), ITO (Indium Tin Oxide), ruthenium oxide ($RuO_2$), or the like.

It is also possible to use metal oxides and metal compound fine particles having properties of semiconductor. Examples thereof include: oxide semiconductive fine particles such as $In_2O_3$, $SnO_2$, ZnO, Cdo, $TiO_2$, $CdIn_2O_4$, $Cd_2SnO_2$, $Zn_2SnO_4$, and $In_2O_3$-ZnO; fine particles doped with impurities suitable for these materials; spinel compound fine particles such as MgInO and CaGaO; conductive nitride fine particles such as TiN, ZrN, and HfN; and conductive boride fine particles such as LaB. These can be used either solely or as a mixture of two or more types.

1-3. Fine particles for surface antibacterial material

When the single particle layer of the present embodiment is used for an antibacterial function, it is preferable to use metals or metal oxide fine particles having antibacterial or sterilizing effects as the fine particle.

Specific examples of the materials which can form such metal (compound) fine particles include: metals as simple substance having sterilizing properties such as silver (Ag) and copper (Cu); alloys containing at least one type of these metals; and oxides of these metals. Examples thereof further include metal oxide semiconductors such as titanium oxide, iron oxide, tungsten oxide, zinc oxide, strontium titanate which exhibit sterilizing effects by the irradiation of light having the wavelength of ultraviolet region such as fluorescent lamp or sunshine; and metal compounds produced by modifying the above-described metal oxide compounds with platinum, gold, palladium, silver, copper, nickel, cobalt, rhodium, niobium, tin, and the like.

1-4. Fine particles for an ultraviolet adsorbing member

When the single particle layer of the present embodiment is used for an ultraviolet adsorbing function, it is preferable to use as the fine particle, a metal oxide fine particle such as iron oxide, titanium oxide, zinc oxide, cobalt oxide, chromium oxide, tin oxide, or antimony oxide in order to have a high light-blocking function in ultraviolet rays A and B regions (light wavelength of 280 to 400 nm). In the present embodiment, a polymer compound is used as the base member and bonded with the fine particle to exhibit high function and processability as the ultraviolet blocking film sheet, thereby being expected to have various applications. It is also expected to improve light stability against light, of the polymer material, by making use of the ultraviolet blocking effects of the metal oxide.

1-5. Fine particles for optical material

Examples of fine particles usable when the thin film laminated with a single particle layer of the present embodiment is used in color filters, sharp cut filters, or nonlinear optical material for use in optical devices, include semiconductors such as CdS and CdSe and fine particles made from a metal such as gold. As the base member, silica glass or alumina glass can be preferably used in color filters and the like. Further, as the high third-order optical nonlinear susceptibility thereof has been confirmed high recently, these materials are expected to function as nonlinear optical materials used for optical switches, optical memory, and the like. Specific examples of fine particles to be used in this case include noble metals such as gold, platinum, silver, and palladium and alloys thereof, and it is preferable in terms of safety to use fine particles made from material which is not quickly dissolved in alkali, such as gold or platinum.

Specific examples of the ultrafine particles of a metal (compound) suitable for nonlinear optical material include ultrafine particles with an average particle diameter of 10 to 1000 angstrom such as gold (Au), silver (Sg), copper (Cu), platinum (Pt), palladium (Pd), rhodium (Rh), osmium (Os), iron (Fe) , nickel (Ni) , and ruthenium (Ru) in simple substance, and alloys containing as least one type of these metals. Regarding the particle diameter, the particles may be either primary particle or secondary particle; however, it is preferable that the particles do not cause scattering of the visible light. Particularly preferable examples of the fine particles include noble metal particles which are selected from Au, Pt, Pd, Rh, and Ag, and metal particles selected from Ti, V, Cr, Mn, Fe, Ni, Cu, Zn, Cd, Y, W, Sn, Ge, In, and Ga which can be independently dispersed in a solvent such as toluene and have a particle diameter of not more than 10 nm.

1-6. Fine particles for organic electroluminescent device

An organic electroluminescent device can be formed with the thin film laminated with a single particle layer of the present embodiment by using fine particles containing aggregated organic pigment molecules which emit light by the excitation of hot carriers as the fine particle, and forming a layer of such fine particles on the base member surface having electrodes. Examples of the organic pigments which can be used in this case are mentioned below. However, the particles are not limited to such examples, and various types of organic pigments can be selected depending on the application of the solid photo-functional device.

Examples of the usable organic pigments include: oxazole-based pigments with blue light emission such as p-bis [2-(5-phenyloxazole)] benzene (POPOP); coumarin-based pigments with green light emission such as coumarin 2, coumarin 6, coumarin 7, coumarin 24, coumarin 30, coumarin 102, and coumarin 540; rhodamine-based (red) pigments with red light emission such as rhodamine 6G, rhodamine B, rhodamine 101, rhodamine 110, rhodamine 590, and rhodamine 640; oxazine-based pigments such as oxazine 1, oxazine 4, oxazine 9, and oxazine 118 which can provide light emission in the near-infrared region; and oxazine-based pigments which are particularly suitable for photo-functional devices matching with optical communication.

In addition, cyanine-based pigments such as phthalocyanine and a cyanine iodide compound can be used. In selecting these pigments, it is preferable to select those easily dissolved in a polymer like acrylic resin, in terms of forming a thin film. Such pigments include: POPOP, coumarin 2, coumarin 6, coumarin 30, rhodamine 6G, rhodamine B, and rhodamine 101.

Examples of the above-described fine particles to be used further include organic molecules used for an organic electroluminescence (EL) film such as 8-hydroxy quinoline aluminum ($AlQ_3$), 1,4-bis-(2,2 diphenyl vinyl) biphenyl, a polyparaphenylene vinylene (PPV) derivative, a distyryl arylene derivative, a styryl biphenyl derivative, a phenanthroline derivative, or fine particles made from a solvent composed of the organic molecules and an additive.

(Support)

The support base member used to form the surface where a graft polymer chain having a polar group is present, of the present embodiment, can be of any material, as long as it is a dimensionally stable plate-like material and meets the required levels of flexibility, strength, durability, and the like. However, when a transparent support having light transmission properties is selected, it is possible to use glass, plastic film (for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinyl acetal), and the like. As the support base member not requiring transparency, it is possible to use, in addition to those mentioned above, paper, paper laminated with plastic, plates of metal (for example, aluminum, zinc, and copper) , and paper or plastic films laminated or vapor deposited with the metals which mentioned above, and the like.

These materials can be appropriately selected according to the application and the relation with the fine particle to be adsorbed, and in terms of processability and transparency, the base member having a surface made from a polymer resin is preferable. To be more specific, resin film, transparent inorganic base member such as glass whose surface is coated with resin, a composite material whose surface layer is a resin layer can all be used preferably.

The typical examples of the base member having a surface coated with resin include: a laminate plate with a surface having a resin film pasted thereon; a base member subjected to a primer process; and a base member subjected to a hard coat process. The typical examples of the composite material having a resin layer as the surface layer include a resin seal member having an adhesive agent layer on its back surface side, and a laminated glass consisting of glass and resin.

As long as the support has excellent flatness, any material is preferable as the support used for particle assembly.

For the production of the thin film laminated with a single particle layer of the present embodiment, a particle-containing liquid for applying fine particles having the aforementioned function onto the support is prepared, the liquid is developed on the hydrophilic surface of the support, and dried while controlling the thickness of the liquid, to eliminate the solvent.

[Preparation of the particle-containing liquid]

The particle-containing liquid can be prepared by dispersing the aforementioned functional fine particles in a water-based solvent. The amount of the fine particles to be added is preferably in a range of 0.1 to 50% by weight, and more preferably in a range of 0.5 to 20% by weight. Too large or too small content of fine particles makes it difficult to produce uniform assembly.

The dispersion medium is preferably a water-based solvent in terms of the affinity with a hydrophilic surface, and to be more specific, it is possible to use water; alcohols such as methanol and ethanol; and ethers such as THF, dioxane, ethylene glycol, and dimethyl ether.

[Coating and drying]

For the development of the above prepared particle-containing liquid onto a hydrophilic surface, the liquid can be coated by a well-known coating method such as spin coating or bar coating.

It is also possible to use in forming a liquid film on a hydrophilic surface the method for precisely forming a water film employed to array fine particles and the device therefor described in JP-A Nos. 7-116502, 9-92617, and 6-33925 proposed by Kuniaki Nagayama et al.

It goes without saying that use of the specific hydrophilic surface of the present embodiment enables formation of a single particle layer in which fine particles are regularly arrayed in a large area, if a general coating and drying methods are used, and renders a special device or method described in JP-A No. 7-116502 unnecessary.

In the method of the present embodiment, "in order to two-dimensionally aggregate fine particles while controlling development thickness (of a liquid film)", the amount of application and drying condition of the liquid can be controlled as follows.

The amount of coating is preferably in a range of 0.1 to 100 $g/cm^2$, and more preferably in a range of 0.5 to 10 $g/cm^2$ in the state of being wet after development. Because of the high hydrophilicity of the support surface, the mere coating of the liquid can form a liquid film having a uniform thickness on the support surface.

As the prepared liquid film dries, the elimination of the solvent causes the liquid to move, which applies a stress 'in addition to the surface tension' on the fine particles present in the liquid film or on its surface. This causes the fine particles to be aggregated two dimensionally and arrayed on the support surface in the state of a single particle.

In this case, if the drying is too fast, the fine particles may aggregate unevenly or fuse each other, making it harder to produce two-dimensional aggregation. Therefore, in general, the drying temperature is preferably not higher than 180°C, although it depends on the solvent to be used. The drying temperature is preferably in a range of room temperature to 80°C. It is particularly preferable to dry the liquid film slowly at room temperature, from the viewpoint of forming a uniform single particle array.

The preferable drying hours are in a range of 10 seconds to 10 hours, and more preferably in a range of 1 minute to 6 hours. When water is used as the dispersion medium, 3 to 6 hours or so are preferable.

The thin film laminated with a single particle layer of the present embodiment thus obtained has a single particle layer in which fine particles of any appropriate type are uniformly arrayed in a state of being densely filled therein and in a two dimensional manner. Therefore it enables easily providing a desired function to the thin film surface, which leads to widening a range of application.

The state of fine particles arranged in a single particle layer can be easily checked by, for example, using a transmission electron microscope.

EXAMPLES

The present embodiment will be described specifically in the following examples, however, the present invention is not restricted to these examples.

(Example 1)

[Formation of the supporting base member having a hydrophilic graft polymer on its surface]

(Fixing an initiator onto a silicon substrate)

Silane coupling agent bonded with a polymerization-initiating radical (5-trichlorosilyl phenyl)-2-bromo-2-methyl propionate was synthesized by the method shown in the following reference C. J. Hawker et al. , "Macromolecules" 1999, volume. 32, page 1424.

A silicon plate used as the substrate was soaked overnight in piranha solution ($H_2SO_4$: $H_2O_2$ = 3:1), washed well with ion-exchange water, and stored in water. Under an argon flow, the silicon plate taken out of the water was dried with nitrogen until moisture on the surface was removed, and then soaked overnight in a 1% dehydrated toluene solution of the silane coupling agent under an argon flow. Later, the silicon plate was taken out and washed with toluene and methanol.

(Synthesis of a hydrophilic surface graft polymer from the silicon substrate with the modified surface)

55.2 g of ion-exchange water was put in a 1-liter separable flask, and 16 g (0.40 mol) of sodium hydroxide was added and dissolved therein. Then, 28.8 g (0.40 mol) of acrylic acid were slowly added dropwise to this solution under an ice bath so as to regulate it at pH7. Under an Ar flow, 0.891 g (9.0 mmol) of copper chloride (I) and 3.12 g (20.0 mmol) of 2 , 2' -bipryidyl were added to this solution and stirred until they became homogeneous. Then, the silicon wafer prepared by the aforementioned method was soaked in the solution and stirred overnight. After the reaction had completed, the wafer was washed with water. The surface of the wafer was scrubbed and cleaned with cloth (BEM cotton) soaked with methanol whereby a base member "A" having a surface graft polymer was obtained.

The film thickness was measured with ellipsometry (VB-250 manufactured by J. A. Woollam Co., Inc.) and it was found that the graft had a film thickness of 100 nm. All of plural spots measured by the ellipsometry had nearly the same degree of thickness, which revealed that a graft film with a uniform thickness was formed.

[Formation of the fine particle film by applying convective assembly to a support having a graft polymer]

An aqueous dispersant solution of carboxy terminated polystyrene particles (average fine particle diameter: 1.0 μm, concentration: 1.0% by weight, manufactured by Polyscience, Inc.) was applied on the substrate "A" having the hydrophilic surface prepared as above with a wire bar #8, and left at room temperature to dry for 5 hours. After the drying, it was washed with water, whereby a thin film member "B" having a polystyrene particle layer on the surface was obtained.

[Evaluation of two-dimensional assembling properties]

The surface of the obtained member "B" was observed under a transmission electron microscope (JEOL JEM-200CX) at a magnifying power of 6, 000 and it was found that fine particles were arrayed regularly in a single layer.

(Comparative Example 1)

[Formation of a fine particle film by applying convective assembly to a support not having a graft polymer]

A silicon plate used as the substrate was soaked overnight in piranha solution ($H_2SO_4$:$H_2O_2$ = 3:1), washed well with ion-exchange water so as to make it have a hydrophilic surface. The formation of a fine particle film by convective assembly was carried out basically in the same manner as in Example 1, but without subjecting this substrate to the synthesis of the hydrophilic surface graft polymer performed in Example 1. Observation of the surface SEM photographs of the obtained particle film revealed that the particles adhered on the surface at random, with no such a regularly arrayed structure observed in Example 1.

(Comparative Example 2)

[Formation of a fine particle film by being adsorbed to the support having a graft polymer]

The substrate "A" prepared in Example 1 was soaked in 1.0% by weight of an aqueous dispersant solution of carboxy terminated polystyrene particles (the one used in Example 1, manufactured by Polyscience, Inc.) for 1 hour, taken out, washed with water, and subjected to a surface SEM observation. The surface had almost no adhesion of fine particles thereon. This has proved that the particle adhesion using convective assembly is not caused only due to by the electrostatic interaction between the carboxyl group of the graft film and the carboxyl group of the fine particles.

(Example 2)

[Formation of a fine particle film by applying convective assembly to the support having a graft polymer]

An aqueous dispersant solution of silica particles (average particle diameter: 1.0 μm, concentration: 1.0% by weight, manufactured by UBE NITTO KASEI CO., LTD.) was applied on the graft substrate "A" prepared in Example 1 with a wire bar #8, and left at room temperature to dry for 5 hours. After the drying, it was washed with water, whereby a thin film member "C" having polystyrene particles adhered on the surface was obtained.

[Evaluation of two-dimensional assembling properties]

The surface of the obtained member "C" was observed under a transmission electron microscope (JEOL JEM-200CX) at a magnifying power of 6,000 and it was found that the fine particles were arrayed regularly in a single layer.
As described hereinbefore, the present embodiment can provide a high-quality thin film laminated with a single particle layer where functional fine particles are formed as a single layer on the film surface. According to the method for producing the thin film laminated with a single particle layer of the present embodiment, by controlling the single particle aggregation, the formation of the aforementioned high-quality thin film laminated with a single particle layer can be effected rapidly and in a large area.

[Second Embodiment]

A second embodiment of the invention will be explained in detail as follows.

The thin film laminated with a single particle pattern layer of the present embodiment comprises: a support having a surface where a hydrophilic graft polymer chain of a patterned configuration is present; and a single particle layer composed of fine particles adhered in a state of a single particle pattern layer in a region of the support where the hydrophilic graft polymer chain is present.

For the formation of such a thin film laminated with a single particle pattern layer, a liquid for forming a fine particle layer is developed on the support surface where a graft polymer chain of a patterned configuration, having a hydrophilic group, is present; and the fine particles contained in the liquid are two dimensionally aggregated, while controlling development thickness of the developed liquid by making use of a convective assembly phenomenon, whereby particle aggregation is effected exclusively in a region where the pattern-like hydrophilic graft polymer chain is present.

In this case, when the particle-containing liquid is developed on the entire surface of the support by making use of convective assembly phenomenon, the fine particles are uniformly arrayed exclusively in a hydrophilic region, that is, a region where the pattern-like hydrophilic graft polymer chain is present. In a region containing no hydrophilic graft polymer chain, a uniform liquid film suitable enough for convective assembly is hard to be formed. Accordingly, in the present embodiment, a regular array of the fine particles is hardly formed in the hydrophobic region.

Description of convective assembly which is a basic technique for the production of the thin film laminated with a single particle layer of the present embodiment will be omitted here since it is identical to that explained in the first embodiment.

In the method of the present embodiment, the use of the support having a surface where a hydrophilic graft polymer chain of patterned configuration with high hydrophilicity is present achieves the formation of a stable wetting film (liquid film), which is one of the conditions required for the occurrence of convective assembly. This enables the fine particles to move freely in the liquid film or on the liquid film surface, without damaging the stress to be given to the fine particles by the fine particle assembling force and the lateral capillary force resulting from the liquid flow in the liquid film. As a result, it possible to easily obtain a thin film laminated with a single particle layer by a coating process, without employing a special device.

As explained in the first embodiment, this property seems to result from the high motility of the graft polymer chain in the graft hydrophilic film. This property appears only in a region where a hydrophilic graft polymer chain of patterned configuration is present, and in a region containing no hydrophilic graft polymer chain, a uniform liquid film suitable for convective assembly is hard to be formed. Accordingly, a regular array of the fine particles is hardly formed in the hydrophobic region.

Even when the hydrophobic region has some undesired adhesion of the fine particles, it can be easily removed by being washed with small amounts of running water.

The structure of the thin film laminated with a single particle layer of the present embodiment will be explained as follows.

<The support having a surface where a hydrophilic graft polymer chain of patterned configuration is present>

The aforementioned surface of the support of the present embodiment represents a surface where a hydrophilic graft polymer chain of patterned configuration and thus has a pattern where is present hydrophilicity is high, and the surface will hereinafter be referred to as "the hydrophilic pattern surface". In such a surface, a hydrophilic graft polymer chain can be directly bonded with the support surface, or an intermediate layer with which a graft polymer is easily bonded can be formed on the support surface so as to make a hydrophilic polymer be grafted to the intermediate layer.

Furthermore, the hydrophilic surface in the present embodiment can be formed, for example, by using a polymer having a hydrophilic graft polymer chain bonded with a trunk polymer compound or a polymer having a hydrophilic graft polymer chain bonded with a trunk polymer compound and also having a cross-linkable function group introduced thereto, by coating or coating and linking, or by using a composite containing a hydrophilic polymer having a cross-linked group at a terminal thereof and a cross-linking agent by coating or coating and cross-linking.

For the process of forming a region where a hydrophilic graft polymer chain is present in the form of a pattern in the present embodiment, well-known methods can be applied.

One method (A) for producing a hydrophilic graft polymer chain of patterned configuration is: performing energy application locally to a substrate by light irradiation or the like while a polymeric monomer is made contact with the substrate, so as to generate an active site such as radicals on the substrate, and making the polymeric monomers be polymerized sequentially with the active site as a starting point, thereby forming a graft polymer chain only in a region having the active site. A specific example of method (A) is described in "Langumuir" written by Nakayama, Matsuda et al., volume. 15, 1999, page 5560, and this method can be applied to the invention.

Another method (B) includes: fixing an initiator in the form of a pattern on a substrate to make the initiator fixed in patterned configuration cause radical polymerization by light, heat, catalyst, or the like, thereby forming a graft polymer chain exclusively in a region where the initiator is present in the patterned manner. This method can be carried out, for example, by fixing a radical polymerization initiator such as sulfonyl chloride in a patterned configuration and effecting polymerization from the fixed initiator, as described in JP-A No. 11-263819.

There is another method(C) including: forming a graft polymer chain on the entire substrate by a known method, and later causing abrasion in the region by applying light or heat in a patterned configuration and then removing the graft polymer chain from the substrate. This method is described, for example, in JP-A No. 11-119413.

There is further another method: (D) previously forming a graft polymer chain having a functional group which changes between being hydrophilic and being hydrophobic by the energy application on the entire substrate, and applying the energy such as light or heat in the form of a pattern, thereby causing polar conversion in the functional group of the graft polymer, making a prescribed region have a hydrophilic graft polymer chain. This method can be executed using the graft polymer of the polar conversion type described in U.S. Patent No. 6461792.

In the present embodiment, for the formation of a region having a hydrophilic graft polymer chain of patterned configuration, any of the aforementioned methods can be adopted. However, in terms of simplicity, method (B), that is, fixing an initiator in a patterned configuration on the substrate is preferable. Above all, because of the advantages of high selectivity in particle absorbance and clear pattern, a method using atom transfer radical polymerization is preferable for the formation of a graft polymer chain on the initiator.

Here, the process for fixing an initiator like an image (in the form of a pattern) on the substrate surface can be performed by any methods known in the references. For example, it is possible to expose and develop a substrate using a photoresist material for a fine processing, and to treat the exposed region of the substrate surface with an initiator having a substrate-bondable-group at a terminal thereof, for fixation. Alternatively, as described in JP-A No. 2002-283530, there can be used another method including using a plate whose surface has a convex pattern, and making an initiator having a substrate-bondable-group at a terminal thereof adhere to the substrate surface, thereby transferring the initiator on the substrate surface and fixing the initiator.

It is also possible to fix an initiator at the entire substrate surface and to apply pattern exposure to it so as to deactivate the ability to initiate polymerization of the initiator in a prescribed region, thereby forming a polymerization initiating layer of patterned configuration. In particular, in terms of operational simplicity and suitability in application to a large area, it is preferable to form a pattern by deactivating the initiator.

In the present embodiment, one preferable process for producing a thin film laminated with a single particle pattern layer includes the steps of: (1) fixing an initiator at the entire substrate surface; (2) applying pattern exposure to the fixed initiator so as to deactivate the initiator in the exposed area, thereby forming a pattern consisting of an initiator region which has been deactivated and an initiator region which has not been deactivated, depending on the exposed part/unexposed part; (3) graft polymerizing a monomer having a polar group, particularly a hydrophilic functional group, from the initiator in the unexposed part by using an atom transfer radical polymerization, thereby forming a hydrophilic graft polymer chain of patterned configuration; and (4) adhering fine particles as a single layer onto the region where the hydrophilic graft polymer chain of patterned configuration is formed by using convective assembly.

The hydrophilic graft polymer chain applied to the present embodiment is a structure where one terminal of the polymer is bonded directly to the support surface or to the intermediate layer formed on the support surface, and the graft chain part showing hydrophilicity is not substantially cross-linked. Due to this structure, the motility of the polymer part showing hydrophilicity is neither restricted nor embedded in the strongly cross-linked structure, whereby high motility of the polymer is maintained. This is presumably the reason why the liquid film is excellently formed with high hydrophilicity on the substrate surface, which advantageously acts on the particle assembly method.

The molecular weight of such a hydrophilic graft polymer chain is in a range of Mw 500 to 5, 000, 000, preferably in a range of Mw 1,000 to 1,000,000, and more preferably in a range of Mw 2,000 to 500,000.

A method for producing the thin film laminated with the single particle pattern layer of the present embodiment will be explained as follows in the sequence of processes with reference to specific examples. However, the contents of the present invention is not restricted to these descriptions.

(Support)

The support base member used to form a surface where a graft polymer chain having a polar group is present, of the present embodiment, can be of any material, as long as it is a dimensionally stable plate-like material and has properties suitable for a thin film laminated with a fine particle pattern layer. To be more specific, examples of the base member include a substrate made from metal or inorganic material such as glass, silicon, aluminum, or stainless; organic material such as polymer resin; or a composite of these materials.

As the substrate made from inorganic material, examples thereof include a substrate made from a metal such as gold, silver, zinc, or copper; a substrate made from metal oxide such as ITO, tin oxide, alumina, or titanium oxide; or a substrate having metal oxide layers provided on an appropriate support surface.

On the other hand, examples of the substrate made from organic material include a substrate made from polymer resin such as polyethylene, polypropylene, polystyrene, cellulose diacetate, cellulose triacetate, cellulose propionate, cellulose butyrate, cellulose acetate butyrate, cellulose nitrate, polyethylene terephthalate, polycarbonate, polyvinyl acetal, polyurethane, epoxy resin, polyester resin, acrylic resin, or polyimide resin; and a substrate having a surface layer made of the aforementioned polymer resin provided on an appropriate support surface. In these polymer substrates, a functional group such as a hydroxide group or a carboxyl group can be introduced to the substrate surface by a corona treatment or a plasma treatment in order to improve the bonding properties of the polymer substrate with the initiator having a substrate-reactive-group.

The other features of the base member of the present embodiment are identical to those in the first embodiment, so their explanations will be omitted.

(1) A process of fixing an initiator at the entire substrate surface

In this process, as the initiator to be fixed on the substrate surface, any of the known compounds can be used as long as the compound has a portion in a molecule thereof which portion initiates polymerization by exposure (which portion will hereinafter be referred to as initiating site) and a portion to be bonded with the substrate (bonding site) in the same molecule. The following examples are available as the initiator.

As the initiating site, in general, an organic halide (for example, an ester compound having halogen in $\alpha$ position or a compound having halogen in the benzilic position), a sulfonyl halide or the like can be introduced as the partial structure. As long as it has the same functions as the initiator, it is possible to use a compound having a group which can substitute halogen, such as a diazonium group, an azido group, an azo group, a sulfonium group, or an oxonium group.

The following compounds can be used as the compound to be introduced as the initiating site.

$$C_6H_5\text{-}CH_2X,\ C_6H_5\text{ - }C\,(H)\,(X)\,CH_3,$$

$$C_6H_5\text{ - }C(X)\,(CH_3)_2,$$

(wherein $C_6H_5$ represents a phenyl group and X represents a chlorine atom, a bromine atom, or an iodine atom)

$$R^1\text{-}C\,(H)\,(X)\text{-}CO_2R^2,$$

$$R^1\text{-}C\,(CH_3)\,(X)\text{-}CO_2R^2,$$

$$R^1\text{-}C\,(H)\,(X)\text{-}C\,(O)\,R^2,$$

$$R^1\text{-}C\,(CH_3)\,(X)\text{-}C\,(O)\,R^2.$$

(wherein $R^1$ and $R^2$ can be either the same or different, and represent a hydrogen atom, an alkyl group having 1 to 20 carbons, an aryl group having 6 to 20 carbons, or an aralkyl group having 7 to 20 carbons; and X represents a chlorine atom, a bromine atom, or an iodine atom)

$$R^1\text{ - }C_6H_4\text{ - }SO_2X$$

(wherein $R^1$, $R^2$, and X are identical with their counterparts above) as the initiating portion of the initiator, an $\alpha$-halogen ester compound is the most preferable from the viewpoint of temporal stability).

Examples of the bonding portion present in the initiator, that is, the group bondable with a substrate (more precisely, the functional group bondable with the substrate) include a thiol group, a disulfide group, an alkenyl group, a cross-linked silyl group, a hydroxyl group, an epoxy group, an amino group, an amide group, or the like. Above all, a thiol group and a cross-linked silyl group are particularly preferable as the group bondable with the substrate.

As specific examples of the initiator having an initiating site and a bonding site, that is, an initiator having a partial structure capable of initiating polymerization and a group bondable with the substrate introduced to the partial structure, there are compounds having the structure as shown in the following general formula (I):

$$R^4 R^5 C(X) - R^6 - R^7 - C(H)(R^3) CH_2 -$$

$$[Si(R^9)_{2-b}(Y)_b O]_m - Si(R^{10})_{3-a}(Y)_a \qquad (I)$$

[wherein $R^3$, $R^4$, $R^5$, $R^6$, and $R^7$ are identical with $R^1$ and $R^2$ above; X is identical with X mentioned above; $R^9$ and $R^{10}$ are alkyl groups, aryl groups, aralkyl groups having 1 to 20 carbons, or triorgano siloxy groups expressed by $(R')_3 SiO-$ (wherein R' is a monovalent hydrocarbon group having 1 to 20 carbons, and the three R' s can be the same or different from each other); and when there are two or more of $R^9$ or $R^{10}$, these can be the same or different from each other.

Y represents a hydrogen group, a halogen group, or a hydrolyzability group, which can be the same or different from each other when there are two or more Ys.

And "a" represents 0, 1, 2, or 3; "b" represents 0, 1, or 2; and "m" is an integer of 0 to 19, wherein a + mb ≥ 1 must be satisfied].

Examples of the compound expressed in the general formula (I) are shown as follows.

$$XCH_2 C(O) O(CH_2)_n Si(OCH_3)_3,$$

$$CH_3 C(H)(X) C(O) O(CH_2)_n Si(OCH_3)_3,$$

$$(CH_3)_2 C(X) C(O) O(CH_2)_n Si(OCH_3)_3,$$

$$(CH_3)_2 C(X) C(O) O(CH_2)_n SiCl_3,$$

$$XCH_2 C(O) O(CH_2)_n SiCl_3,$$

$$CH_3 C(H)(X) C(O) O(CH_2)_n Si(CH_3)(OCH_3)_2,$$

$$(CH_3)_2 C(X) C(O) O(CH_2)_n SiCl_3,$$

(wherein X represents a chlorine atom, a bromine atom, or an iodine atom, and n is an integer of 0 to 20).

Other specific examples of the initiators having an initiating site and a bonding site include the structure shown in the following general formula (II).

$$(R^{10})_{3-a}(Y)_a Si - [OSi(R^9)_{2-b}(Y)_b]_m -$$

$$CH_2 - C(H)(R^3) - R^{11} - C - (R^4)(X) - R^8 - R^5 \qquad (II)$$

(wherein $R^3$, $R^4$, $R^5$, $R^7$, $R^8$, $R^9$, $R^{10}$, a, b, m, X, and Y are identical with their counterparts mentioned above).

Examples of the compound expressed in the general formula (II) are shown as follows.

$$(CH_3 O)_3 SiCH_2 CH_2 C(H)(X) C_6 H_5,$$

$$Cl_3SiCH_2CH_2C\,(H)\,(X)\,C_6H_5,$$

$$Cl_3Si(CH_2)_2C(H)\,(X)\,-CO_2R,$$

$$(CH_3O)_2\,(CH_3)\,Si\,(CH_2)_2C\,(H)\,(X)\,-CO_2R,$$

$$(CH_3O)_3Si\,(CH_2)_3C\,(H)\,(X)\,-CO_2R,$$

$$(CH30)_2\,(CH_3)\,Si\,(CH_2)_3C\,(H)\,(X)\,-CO_2R.$$

(wherein X represents a chlorine atom, a bromine atom, or an iodine atom, and R represents an alkyl group, an aryl group, or an aralkyl group having 1 to 20 carbons)

(2) A process of pattern-exposing the fixed initiator to deactivate the initiator in the exposed part, thereby forming a pattern of a deactivated initiator region and a non-deactivated initiator region by the exposed part/unexposed part

In the case of an image formation by the method of the present embodiment, the method for the energy application is not particularly restricted, and it is possible to use either exposure or heating as long as it can apply energy which is sufficient for decomposing the initiating site and deactivating the ability to initiate polymerization. However, in terms of cost performance and device simplicity, it is preferable to irradiate the active rays.
When the active rays are irradiated for the image-wise energy application, it is possible to use either scanning exposure based on digital data or pattern exposure with a litho film.
Methods for energy application for image formation include image-wise heating and writing by radiating irradiation such as exposure. Specific means include light irradiation with an infrared laser, an ultraviolet lamp, visible rays and the like; electron beam irradiation with $\gamma$-rays and the like; and heating with a thermal head. Examples of the light sources to be used for irradiation of radiation light include mercury lamps, metal halide lamps, xenon lamps, chemical lamps, and carbon arc lamps. The radiation rays include electron beams, X-rays, ion beams, and far infrared rays. It is also possible to use g-rays, i-rays, Deep-UV rays, or high-density energy beams (laser beams).

(3) A process of graft polymerizing a monomer having a polar group, particularly a hydrophilic functional group from the initiator in the unexposed part by using atom transfer radical polymerization, thereby forming a hydrophilic graft polymer chain of patterned configuration

Methods for forming a pattern of a graft polymer using atom transfer radical polymerization are already known, and these methods can be applied to the present embodiment.
The monomer used in the present embodiment is preferably a hydrophilic monomer. The hydrophilic monomer to form a graft polymer chain can be any of the known monomers; however, particularly preferable hydrophilic monomers are as follows.
In the present embodiment, specific examples of the particularly useful hydrophilic monomers include: (meta) acrylic acid or its alkali metal salt and amine salt, itaconic acid or its alkali metal salt and amine salt, allylamine or its halide acid salt, 3-vinyl propionic acid or its alkali metal salt and amine salt, vinyl sulfonic acid or its alkali metal salt and amine salt, styrene sulfonic acid or its alkali metal salt and amine salt; 2-sulfoethylene (meta) acrylate, 3-sulfopropylene (meta) acrylate or its alkali metal salt and amine salt; 2-acrylamide-2-methyl propane sulfonic acid or its alkali metal salt and amine salt; acid phosphoxy polyoxy ethylene glycol mono (meta) acrylate, or salts of these; 2-dimethyl aminoethyl (meta) acrylate or its halide acid salt; 3-trimethyl ammonium propyl (meta) acrylate, 3-trimethyl ammonium propyl (meta) acrylamide, or N,N,N-trimethyl-N-(2-hydroxy-3-methacryloyloxy propyl) ammonium chloride, and a monomer having a quaternary ammonium group such as 2 - trimethyl ammonium ethyl acrylate chloride. It is also useful to use amide-based monomers such as 2-hydroxyethyl (meta) acrylate, (meta) acrylamide, N-monomethylol (meta) acrylamide, and N-dimethylol (meta) acrylamide; and ethylene glycol-based monomers such as N-vinyl pyrrolidone, N-vinyl acetamide, and polyoxy ethylene glycol mono (meta) acrylate.
The hydrophilic monomers to be used in the present embodiment are those as described above. By polymerizing these monomers, a hydrophilic graft polymer chain can be formed. However, the hydrophilic monomers of the present invention are not restricted to them.

Particularly useful monomers of the aforementioned monomers are those having an ionic group such as a carboxyl group, a sulfonic acid group, a phosphonic acid group, an ammonium group or a functional group capable of being dissolved in ions.

Next, an atom transfer radical polymerization will be described, which is a preferable method for forming a graft polymer chain from these hydrophilic monomers.

The general radical polymerization has so high a rate of polymerization that termination reaction is easily caused by the coupling between radicals or other reasons. Therefore, it is said to be difficult to control the molecular weight of a polymer; however, it is known that "living radical polymerization" can generate a polymer which is less likely to cause termination reaction and has a small distribution of molecular weight (Mw/Mn is about 1.1 to 1.5), and that the molecular weight thereof can be controlled freely by the ratio between the monomer and the initiator.

Of the "living radical polymerization", "atom transfer radical polymerization", which polymerizes a vinyl-based monomer by using an organic halide or a halogenated sulfonyl compound as the initiator and a transition metal complex as the catalyst, is preferable as a method for producing a vinyl-based polymer having a specific functional group because, in addition to the features of the "living radical polymerization", the polymer has halogen or the like at a terminal, which is advantageous in a functional group conversion reaction, and has relatively large degree of freedom in the design of the initiator or the catalyst.

Specific examples of the atom transfer radical polymerization are described in Matyjaszewski et al. in Journal of American Chemical Society (J. Am. Chem. Soc.) 1995, volume 117, page. 5614; Macromolecules, 1995, volume 28, page 7901; Science, 1996, volume 272, page 866; WO96/30421; WO97/18247; WO98/01480; WO98/40415; Sawamoto et al., Macromolecules, 1995, volume 28, page 1721; and JP-A Nos. 9-208616 and 8-41117.

The atom transfer radical polymerization referred to in the present embodiment includes, in addition to the ordinary atom transfer radical polymerization using as the initiator the aforementioned organic halide, halogenated sulfonyl compound or the like, the "reverse atom transfer radical polymerization" which is a combination of an initiator of common free radical polymerization such as a peroxide and a complex in a highly oxidized state of an ordinary atom transfer radical polymer catalyst such as copper (II).

(Atom transfer radical polymerization catalyst)

The atom transfer radical polymerization needs a catalyst, and one example of such catalyst is a transition metal complex. Transition metal complexes usable as the catalyst are not particularly restricted, and those disclosed in PCT/US96/17780 can be used. Above all, preferable complexes thereof include zero-valent copper, monovalent copper, divalent copper, divalent ruthenium, divalent iron, and divalent nickel.

Above all, the copper complexes are preferable. Examples of the monovalent copper compound include: cuprous chloride, cuprous bromide, cuprous iodide, cuprous cyanide, cuprous oxide, or cuprous chlorate. A tristriphenyl phosphine complex of divalent ruthenium chloride ($RuCl_2$ ($PPh_3$ $_3$) is also a preferable catalyst. When a ruthenium compound is used as the catalyst, an aluminum alkoxide is added as the activator. Other examples of the preferable catalysts include a bistriphenyl phosphine complex of divalent iron ($FeCl_2(PPh_3)_2$), a bistriphenyl phosphine complex of divalent nickel ($NiCl_2(PPh_3)_2$), and a bistributyl phosphine complex of divalent nickel ($NiBr_2$ ($PBu_3$) $_2$) .

When a copper compound is used as the catalyst, the ligands shown in PCT/US96/17780 can be used as the ligand therefor. Although there is no particular limitation, amine-based ligands are usable. Examples of preferable amine-based ligands include: 2, 2'-bipryidyl and a derivative thereof; 1,10-phenanthroline and a derivative thereof; and aliphatic amines such as trialkyl amine, tetra methyl ethylene diamine, pentamethyl diethylene triamine, hexamethyl (2-aminoethyl) and others. In the present embodiment, of the aforementioned preferable examples, aliphatic polyamines such as penta methyl diethylene triamine and hexamethyl (2-aminoethyl) amine are preferable.

The amount of ligand to be used under the ordinary atom transfer radical polymerization is determined by the number of coordination position of transition metal and the number of groups for coordination of the ligands. The number of coordination position of transition metal and the number of the groups for coordination of ligands are set to be nearly equal. For example, 2, 2' -biprlyidyl and a derivative thereof is added to CuBr in a mole ratio of 2:1, and penta methyl diethylene triamine is added in a mole ratio of 1:1.

In the present embodiment, in the case where ligands are added to initiate polymerization and/or to control catalyst activity, it is preferable that metal atoms exceed the ligands in number although there is no particular limitation. The ratio of the number of the coordination position to the number of the groups for coordination is preferably not less than 1.2, more preferably not less than 1.4, particularly preferably not less than 1.6, and most preferably not less than 2.

(Reaction Solvent)

In the present embodiment, graft polymerization reaction can be carried out with a monomer only, without using a solvent, or can be carried out in various kinds of solvents. Solvents usable for the polymerization reaction include: hydrocarbon-based solvents such as benzene and toluene; ether-based solvents such as diethyl ether, tetrahydrofuran, diphenyl ether, anisole, dimethoxy benzene; halogenated hydrocarbon such as methylene chloride, chloroform, and chlorobenzene; ketone-based solvent such as acetone, methyl ethyl ketone, and methyl isobutyl ketone; alcohol-based solvents such as methanol, ethanol, propanol, isopropanol, n-butyl alcohol, and tert-butyl alcohol; nitrile-based solvents such as acetonitrile, propionitrile, and benzonitrile; ester-based solvents such as ethyl acetate and butyl acetate; carbonate-based solvents such as ethylene carbonate and propylene carbonate; and water. These solvents can be used solely or two or more types in combination.

In general, the graft polymerization reaction using a solvent is carried out by adding a monomer (and optionally, a catalyst) into the solvent and then soaking the substrate having an initiator fixed thereon in the solvent, thereby effecting a reaction for a predetermined period of time.

The graft polymerization reaction without a solvent is generally carried out either in room temperature or in a condition heated up to 100°C.

Thus, a hydrophilic surface where a hydrophilic graft polymer chain is present in a patterned configuration can be formed on the substrate. The thickness of the layer consisting the hydrophilic surface can be selected depending on the application. In terms of facilitating a convective assembly phenomenon in the fine particles, the film thickness which results in good water film forming properties is preferably in a range of 0.001 to 10 $\mu$m, more preferably in a range of 0.01 to 5 $\mu$m, and most preferably in a range of 0.1 to 2 $\mu$m.

(4) A process of adhering fine particles in the form of a single layer to the obtained pattern-like hydrophilic graft polymer chain formation region by using convective assembly

[Fine particles]

The fine particles to form the particle layer of the present embodiment are identical to those explained in the first embodiment, so their explanation will be omitted.

[Preparation of a particle-containing liquid]

The preparation of a particle-containing liquid is identical to that explained in the first embodiment, so its explanation will be omitted.

[Coating and drying]

The development (coating) of the prepared particle-containing liquid to the hydrophilic surface and drying of the coating are carried out in the same manner as in the first embodiment, so their explanation will be omitted.

The thin film laminated with a single particle pattern layer of the present embodiment thus obtained has a pattern-like single particle layer where fine particles of any appropriate type are arrayed in a two dimensional manner in a state of being densely filled in a single layer. Accordingly, it is possible to easily provide an arbitrary region on the thin film surface with a desired function in accordance with the properties, which enables a wide range of application.

The state of the fine particles of a single particle layer of a patterned configuration can be easily checked through an observation under a transmission electron microscope.

EXAMPLES

The present embodiment will be described specifically in the following examples; however, the invention is not restricted to them.

(Example 1)

[Formation of a support base member having a hydrophilic graft polymer on the surface]

(Fixing an initiator onto a silicon substrate)

Silane coupling agent: (5-trichlorosilyl phenyl)-2-bromo-2-methyl propionate bonded with a polymerization initiating group was synthesized by the method shown in the following reference: C. J. Hawker et al., "Macromolecules" 1999, volume 32, page 1424.

A silicon plate used as the substrate was soaked overnight in piranha solution ($H_2SO_2{:}H_2O_2$ = 3:1), washed well with ion-exchange water, and stored in water. Under an argon flow, the silicon plate taken out of the water was dried with nitrogen until moisture on the surface was removed, and then soaked overnight in a 1% dehydrated toluene solution of the silane coupling agent under an Ar flow. Later the silicon plate was taken out and washed with toluene and methanol.

(Forming an initiator pattern)

The silicon substrate with modified silane coupling to which the initiator terminal silane coupling agent has been fixed, which had been synthesized by the aforementioned method, was made adhere to a mask pattern formed on a quartz plate and exposed for 20 minutes using an UV exposure (UV irradiation device (UVL-4001-N): high pressure mercury arc lamp, manufacture by Ushio Inc.) . As a result, the initiator in the UV exposed portion was deactivated, resulting in the formation of a pattern-like initiator region.

(Synthesis of a hydrophilic surface graft polymer from the silicon substrate with a modified surface)

As the ion exchange water, Milli-Q Labo (manufactured by MILLIPORE) was used after being purified (18 MΩ). 55.2 g of the ion-exchange water was put in a 1-liter separable flask, and 16 g (0.40 mol) of sodium hydroxide was added and dissolved therein. Then, 28.8 g (0.40 mol) of acrylic acid were slowly added dropwise to this solution under an ice bath so as to regulate it at pH7. Under an Ar flow, 0.891 g (9.0 mmol) of copper chloride (I) and 3.12 g (20.0 mmol) of 2,2'-bipryidyl were added to this solution and stirred until they became homogeneous. Then, the silicon substrate prepared by the aforementioned method was soaked in the solution and stirred overnight. After the reaction had completed, the wafer was washed with water, whereby the base member "A" having a graft polymer chain of a patterned configuration, in which base member "A" acrylic acid was grafted in a patterned manner exclusively in the region where the initiator is present, was obtained.

The height of this pattern was checked by measuring at plural spots with an AFM (Nanopics 1000 manufactured by Seiko Instruments Inc.) and it was confirmed, in all of the spots, that a pattern was formed with a uniform thickness at a height of 300 nm.

[Formation of the particle film by applying convective assembly to the support having a pattern-like graft polymer]

An aqueous dispersant solution of carboxy-terminated-polystyrene particles (average fine particle diameter: 1.0 μm, concentration: 1.0% by weight, manufactured by Polyscience, Inc.) was applied on the substrate "A" having the pattern-like hydrophilic surface prepared as above with a wire bar #8, and left at room temperature to dry for 5 hours. After the drying, it was washed with water, whereby a thin film member "B", laminated with a single particle pattern layer composed of polystyrene particles and provided in a patterned manner on the surface, was obtained.

[Evaluation of two-dimensional assembling properties]

The surface of the obtained member "B" was observed under a transmission electron microscope (JEOL JEM-200CX) at a magnifying power of 6, 000 and it was found that fine particles were arrayed regularly in a single layer exclusively in the pattern region where a graft polymer chain was present.

(Comparative Example 1)

[Formation of a fine particle film by being adsorbed to the support having a graft polymer]

The substrate "A" having the pattern-like hydrophilic surface prepared in Example 1 was soaked in 1.0% by weight of an aqueous dispersant solution of carboxy-terminated polystyrene particles (the same dispersion used in Example 1 manufactured by Polyscience, Inc.) for 1 hour, then taken out, washed with water, and subjected to a surface SEM observation. The surface exhibited substantially no adhesion of fine particles thereon including the region where a graft polymer chain was present. This has proved that the patterned fine particles adhesion by convective assembly employed in Example 1, in which the same particles dispersant solution was applied on the surface and dried, is caused not only due to the electrostatic interaction between the carboxyl group of the graft film and the carboxyl group of the fine particles.

(Example 2)

[Formation of a particle film by applying convective assembly to the support having a graft polymer]

An aqueous dispersant solution of silica particles (average particle diameter: 1.0 µm, concentration: 1.0% by weight, manufactured by UBE NITTO KASEI CO., LTD.) was applied on the substrate "A" having a pattern-like hydrophilic surface prepared in Example 1 with a wire bar #8, and left at room temperature to dry for 5 hours. After the drying, it was washed with water, resulting in a thin film "C" laminated with a single particle pattern layer, which was a layer of silica particles provided in a patterned manner on the surface.

[Evaluation of two-dimensional assembling properties]

The surface of the obtained member "C" was observed under a transmission electron microscope (JEOL JEM-200CX) at a magnifying power of 6,000 and it was found that fine particles were arrayed regularly in the single layer exclusively in the pattern region where a graft polymer chain was present.
As described hereinbefore, the present embodiment can provide a high-quality thin film laminated with a single particle pattern layer, in which functional fine particles are provided in a desired pattern on the film surface, forming a single layer. According to the method for producing the thin film laminated with a single particle pattern layer of the present embodiment, by controlling the fine particles aggregation, the formation of the highly selective and high-quality thin film laminated with a single particle pattern layer can be effected rapidly and in a large area.

[Third Embodiment]

The present embodiment will explain an optical film as an application example of the novel two-dimensional particle thin film of the invention.
The optical film of the present embodiment comprises: a light transmissive support having a surface where a hydrophilic graft polymer chain is present; a single particle layer which is composed of light transmissive fine particles provided on the support; and a light transmissive resin layer provided on the single particle layer.
A method for producing such an optical film comprises the steps of: developing a liquid containing light transmissive fine particles onto a light transmissive support having a surface where a hydrophilic graft polymer chain is present; effecting two-dimensional aggregation of the light transmissive fine particles while controlling development thickness of the liquid containing light transmissive fine particles, thereby forming a single particle layer; and providing a light transmissive resin layer on the single particle layer.
Convective assembly which is a basic technique for the production of the single particle layer of the present embodiment will not be explained here since it is identical to that explained in the first and second embodiments.
The structure and production process of the optical film of the present embodiment will be explained as follows.
The "surface where a hydrophilic graft polymer chain is present" in the optical film of the present embodiment is identical to the "surface where a hydrophilic graft polymer chain is present" in the first and second embodiments, so its explanation will be omitted.
In the present embodiment, similar to the first and second embodiments, (a) a surface structure in which a hydrophilic graft polymer chain is bonded with the support surface directly or with the intermediate layer formed on the support surface is referred to as "surface graft", and (b) a surface structure in which a hydrophilic graft polymer chain is introduced in a polymer cross-linked film structure is referred to as a "cross-linked hydrophilic layer adopting a hydrophilic graft chain". The support or the member provided with the intermediate layer on the support is referred to as a "base member".
A method for forming this hydrophilic surface in the present embodiment will be described as follows.

<Intermediate layer>

In the present embodiment, it is preferable to provide an intermediate layer on the support surface to facilitate the bonding of the hydrophilic graft polymer chain onto the support surface. Such an intermediate layer can be prepared by dissolving (i) a polymeric compound or (ii) a polymerization initiator into an appropriate solvent; applying the coating liquid on a support surface by coating or the like; and hardening the coating with heat or light irradiation.

(i) Polymeric compound

There is no particular limitation on the polymeric compound used as the intermediate layer as long as it has excellent adhesion with the support and the hydrophilic graft polymer chain to be contained in the upper layer can be added thereto to by energy application such as active ray irradiation. However, above all, a hydrophobic polymer having a polymeric group in a molecule is preferable.

Specific examples of such a hydrophobic polymer include: diene-based homopolymers such as polybutadiene, polyisoprene, and polypentadiene; homopolymers of aryl group-containing monomers such as aryl (meta) acrylate and 2-aryloxyethyl methacrylate; and two-dimensional or multi-dimensional copolymers composed of an the aryl-group-containing monomer or a diene-based homopolymer such as polybutadiene, polyisoprene, or polypentadiene as the component unit, with styrene, (meta) acrylic ester or (meta) acrylonitrile.

In this specification, when one or both of "acryl and methacryl" is indicated, it may be noted as "(meta) acryl".

The amount of a polymeric compound to be added in the intermediate layer is preferably in a range of 0 to 100% by weight and particularly preferably in a range of 10 to 80% by weight as solid state.

(ii) Polymerization initiator

The intermediate layer of the present embodiment preferably contains a polymerization initiator which exhibits the ability to initiate polymerization by energy application. The polymerization initiator used in the intermediate layer can be appropriately selected depending on the application, from known heat polymerization initiators, photopolymerization initiators, and the like which can exhibit the ability to initiate polymerization by the action of predetermined energy such as irradiation of active light beams, heating, and irradiation of electron beams. Above all, use of photopolymerization which is higher in reaction rate (rate of polymerization) than heat polymerization is preferable in terms of production suitability. Accordingly, it is preferable to use a photopolymerization initiator.

There is no particular limitation on such a photopolymerization initiator as long as the photopolymerization initiator is made active by active light beams to be irradiated thereon and can effect polymerization between the polymerizable compound contained in the intermediate layer and the hydrophilic graft polymer chain contained in the upper layer. Specific examples of this photopolymerization initiator include: radical polymerization initiators, anion polymerization initiators, and cation polymerization initiators.

The amount of a polymerization initiator to be added in the intermediate layer is preferably in a range of 0.01 to 20% by weight and particularly preferably in a range of 0.1 to 10% by weight as solid state.

There is no particular limitation on the solvent used in coating the aforementioned polymerizable compound and the polymerization initiator as long as the polymerizable compound and the polymerization initiator can be dissolved to the solvent. In terms of drying easiness and workability, solvents having not too high a boiling point, and more specifically, solvents having a boiling point of 40 to 150°C can appropriately be selected. The appropriate concentration of the solid part in the coating solution is 2 to 50% by weight.

The amount of coating for an intermediate layer in the case where the intermediate layer is formed on the support is preferably 0.1 to 20 g/m$^2$, and more preferably 1 to 15 g/m$^2$, as the mass after the drying. Within this range, the intermediate layer can have excellent resistance as a membrane, and exhibit a sufficient ability to initiate polymerization, so as to facilitate obtaining a desired hydrophilic surface.

In the present embodiment, an intermediate layer is formed by arraying the composites for the intermediate layer formation by coating or the like and removing the solvent. In this case, it is preferable to harden the film by heating and/or light irradiation. It is particularly preferable to perform preliminary film hardening by light irradiation after the drying with heat, thereby previously hardening the polymeric compound to some extent, because it can effectively prevent the occurrence of the coming off of the entire intermediate layer after achieving hydrophilic grafting. The light irradiation is employed for the preliminary hardening on the basis of the same reason mentioned in the section of the photopolymerization initiators.

The temperature and time length of the heating can be selected so that the coating solvent can be fully dried; however, it is preferable in terms of proper production that the temperature is not higher than 100°C and the drying duration is within 30 minutes, and it is more preferable to select a heating condition with a drying temperature of 40 to 80°C and a drying duration of within 10 minutes.

<(a) Method for producing a surface graft>

Methods for producing a surface having a hydrophilic group composed of a graft polymer on the base member include two methods for bonding the base member and the graft polymer by chemical bonding, and for polymerizing a compound having a polymerizable double bond by using the base member as a starting point, thereby producing a graft polymer.

These two methods are identical to the "two methods for producing a surface having a hydrophilic group composed of a graft polymer on the base member" explained in the first and second embodiments, so their explanation will be omitted.

<(b) Method for producing a cross-linked hydrophilic layer adopting a hydrophilic graft chain>

The cross-linked hydrophilic layer adopting a hydrophilic graft chain in the present embodiment can be produced by forming a graft polymer using a known method as a graft polymer synthesis, and cross-linking it. As specific examples of such a method are substantially the same as those corresponding examples described in the first and second embodiments, detailed description thereof will be omitted.

[Light transmissive support]

The support used in the optical film of the present embodiment can be anything as long as it is a light transmissive, dimensionally stable plate-like material, and has necessary flexibility, strength, duration, and other properties.
Such a support preferably has high light transmission properties; however, as long as it is light transmittable, it does not have to be visually transparent, and a non-transparent material can be used. As a guideline of the light transmission properties in the present embodiment, the light beam transmittance measured in conformity with JIS C6714 is 80% or higher, and more specifically 85% or higher. The light refractive index of the support used in the present embodiment is preferably in a range of 1.40 to 1.70.
Such a support can specifically be made from glass, plastic film (for example, polyester, polyamide, polyvinyl alcohol, polyurethane, polyacetal, acrylic, epoxy, silicone, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, or polyvinyl acetal), or the like.
These support materials can be appropriately selected depending on the application or the relation with the light refraction index of the fine particles which will be described later. The thickness of the support can also be appropriately selected depending on the application or the intended light beam transmittance.

[Single particle layer]

The single particle layer of the present embodiment indicates a layer which is composed of light transmissive fine particles aggregated two dimensionally by convective assembly and which is formed on the support. The following is a description about the light transmissive fine particles composing such a single particle layer.

(Light transmissive fine particles)

There is no particular limitation on the light transmissive fine particles used in the present embodiment as long as they are made from light transmissive resin. These fine particles do not have to be necessarily transparent, and can be colored depending on the application. The light transmissive fine particles used in the present embodiment are preferably different in light refraction index from at least one of the support and the light transmissive resin layer which will be described later. Those which are spherical and have a light refraction index in a range of 1.42 to 1.60 are preferable as an optical film because of their high light transmission properties.
Specific examples of such fine particles include: inorganic filler such as silica, glass powder, and quartz; and organic particles such as acrylic resin, polystyrene resin, a styrene-acrylic copolymer, polyethylene resin, epoxy resin, silicone resin, polyvinylidene fluoride, Teflon (registered trademark), divinyl benzene, phenol resin, urethane resin, cellulose acetate, nylon, cellulose, benzoguanamine, and melamine. These fine particles can be appropriately selected depending on the application or the relation with the support and the light refraction index of the light transmissive resin layer which will be described later. The diameter of the fine particles of the present embodiment is preferably 1 to 50 μm or so, and when they are used in a liquid display (LCD), the range of 1 to 10 μm is preferable.

(Formation of a single particle layer)

The single particle layer of the present embodiment can be formed by preparing a particle-containing liquid having the fine particles, developing it on the hydrophilic surface of the support, and drying it while controlling the film thickness of the liquid, and removing the solvent.
The single particle layer of the present embodiment indicates a single particle layer where particles are arrayed in a two dimensional manner in a state of being densely filled in a single layer on a support surface. Arraying the fine particles in this state makes the incident light pass through the fine particles only once, causing no extra light scattering. This seems to be the reason why high transmission properties and uniform light scattering properties are obtained in the present embodiment.

<Preparation of a particle-containing liquid>

The particle-containing liquid can be prepared by dispersing the fine particles in an appropriate solvent. The preparation of this particle-containing liquid is identical to that in the first embodiment, so the explanation thereof will be omitted.

<Coating and drying>

For the development of the above prepared particle-containing liquid onto a hydrophilic surface, the liquid can be coated by a known coating methods such as spin coating or bar coating.

The development (coating) of the prepared particle-containing liquid to the hydrophilic surface and drying are carried out in the same manner as in the first and second embodiments, so the explanation thereof will be omitted.

The optical film of the present embodiment preferably has substantially no clearance of air or the like between the support and the fine particles. The support having the surface hydrophilic layer of the present embodiment, which has a comparatively highly polymeric hydrophilic graft polymer chain on its surface, tends to cause the fine particles to be embedded inside the surface hydrophilic layer, making it harder to produce a clearance between the support and the fine particles. Furthermore, in providing the light transmissive resin layer which will be described later, the use of the free-flowing resin as a material for the resin layer causes the clearance to be filled with the resin.

The single particle layer thus formed can be easily checked by an observation under a transmission electron microscope.

[Light transmissive resin layer]

There is no particular limitation on the light transmissive resin layer used for the optical film of the present embodiment as long as it is light transmittable and can fill the clearance between the fine particles due to the cubic structure of the fine particles and the clearance between the fine particles and the support with the resin composing the light transmissive resin layer.

The resin material to compose such a light transmissive resin layer preferably has high light transmission properties; however, as long as it is light transmissive, it does not have to be visually transparent, and a non-transparent material can be used. As a guideline of the light transmission properties in the present embodiment, the light beam transmittance measured in conformity with JIS C6714 is 80% or higher, and more specifically 85% or higher. The light refractive index of the support used in the present embodiment is preferably in a range of 1.40 to 1.70.

Methods for filling a clearance between the fine particles and a clearance between the fine particles and the support with the resin include a method for coating resin having fluidity at least during the formation of the light transmissive resin layer onto the single particle layer and a laminate method in which a light transmissive resin film is laminated by applying heat and pressure.

Examples of the resins usable for the formation of a resin layer by the coating method include a resin exhibiting fluidity at normal temperature, a resin showing fluidity when heated, a resin showing fluidity when dissolved in a solvent, a resin which is hardened by light or heat and which is before being hardened.

As methods for applying these fine particles, it is possible to use known methods including various coating methods such as air doctor coating, bar coating, blade coating, knife coating, reverse coating, transfer roll coating, gravure roll coating, kiss coating, cast coating, spray coating, slot orifice coating, calendar coating, electrodeposition coating, dip coating, and dye coating; and various types of printing including letterpress printing such as flexography, intaglio printing such as direct gravure printing and offset gravure printing, planography such as offset printing, and stencil printing such as screen printing.

In the case of forming a light transmissive resin layer by the laminate method, a resin film with a desired thickness is formed by a normal method and then the resin film is subjected to thermo compression bonding. As it is preferable to make, by applying pressure, the resin film softened by heat densely permeate into clearances between the light transmissive fine particles, a thermoplastic resin is preferably used when the laminate method is applied. The thermo compression bonding can be performed, for example, by making the film pass through a pair of heating rolls. It is possible to preheat the resin film before the lamination.

Preferable resins as the material of the light transmissive resin layer of the present embodiment specifically include polyester, polyamide, polyvinylalcohol, polyurethane, polystyrene, polyacetal, polycarbonate, acrylic, epoxy, silicone, and cellulose, and derivatives of these, however, the invention is not restricted to these.

These resins can be appropriately selected depending on the application or the relation with the light refraction index of the fine particles, and two or more types of resins can be used in mixture. The thickness of the light transmissive resin layer composed of these resins can also be appropriately selected depending on the application or the intended light beam transmittance.

[Other structures]

The optical film of the present embodiment may be provided with a base member on the surface of the aforementioned light transmissive resin layer. When the light transmissive resin layer has fluidity, it is preferable to cover the surface thereof with a transparent base member so as to improve handling properties. Such a transparent base member need not be visually transparent as long as it can transmit light, and can be a non-transparent material. However, the more transparent these light transmissive base members are, the better, and preferable resin films should have the following conditions: the light beam transmittance measured in conformity with JIS C6714 is preferably 80% or higher, and more specifically 85% or higher; the haze value (JIS K7105) is 3.0 or below, more preferably 1.0 or below, and most preferably 0.5 or below; and the light refractive index is preferably in a range of 1.40 to 1.80.

Specific materials preferably used for the base member include various resin films such as polyethylene terephthalate (PET), polyethylene naphthalate (PEN), triacetyl cellulose (TAC), polyarylate, polyimide, polyether, polycarbonate, polysulfone, polyether sulfone, cellophane, polyamide, polyethylene, polypropylene, and polyvinyl alcohol. Beside these films, it is also possible to use a resin plate made from these resins, or a sheet member made from a glass material such as quartz glass or soda glass.

In the case where the light transmissive resin layer has adhesiveness, release film or release paper can be provided in addition to the transparent film. It is possible to use the main body of the optical film as an adhesive member by peeling the release film or release paper from the optical film having an adhesive surface. In this case, there is no need for the prevision of an adhesive layer for the adhesion with the liquid crystal cell or the backlight unit while an LCD or the like is being assembled, which improves working efficiency. Since the release film and release paper are intended to be peeled, they do not have to be transparent. To be more specific, besides the transparent film, it is possible to use paper or paper laminated with resin used as the transparent film.

The optical film of the present embodiment thus prepared has both high light transmission properties and uniform light scattering properties, thereby being suitable for a display in LCDs, EL, FEDs, and the like.

EXAMPLES

The present embodiment will be described specifically in the following examples; however, the invention is not restricted to them.

[Example 1]

(Production of the support)

As the support substrate, 80 μm-thick triacetyl cellulose (brand name: Fuji Tac UVD80, refraction index: 1.49, total right beam transmittance: 92.4%, and haze value: 0.15, manufactured by Fuji Photo Film Co., Ltd.) was used. The light polymeric composite shown below was coated with a reverse coater onto a side of this support in such a manner as to be 10 μm thick after being dried, and dried for 2 minutes at 100°C. Then, the coated film was exposed to a 400-W high pressure mercury lamp (UVL-400P manufactured by Riko Kagaku Sangyo Co., Ltd.) for 10 minutes as preliminary hardening, thereby forming an intermediate layer composed of light-polymerized composite. The refraction index of the base member after the formation of the intermediate layer was 1.53.

<Light polymerizable composite>

- aryl methacrylate/methacrylic acid copolymer (mole ratio: 80/20, molecular weight: 100,000)    4 g
- ethylene oxide modified bisphenol A diacrylate (M 210, Toagosei Co., Ltd.)    4 g
- 1-hydroxycyclohexyl phenyl ketone    1.6 g
- 1-methoxy-2-propanol    16 g

(Formation of a hydrophilic surface)

The triacetyl cellulose with the intermediate layer was soaked in an aqueous solution containing acrylic acid (20% by weight) and sodium hypochlorite (0.01% by weight) , and exposed to a 400-W high pressure mercury lamp for 30 minutes in an atmosphere of argon.

After the light irradiation, the obtained film was well washed with ion exchange water so as to obtain a support having a hydrophilic surface to which polyacrylic acid had been grafted. The thickness of the grafted polyacrylic acid was measured with an ATR-IR (total reflection infrared absorption spectrum) and it was found to be 0.55 μm.

(Formation of a single particle layer by convective assembly)

A process of forming a single particle layer composed of light transmissive fine particles onto the obtained support was performed by the following method.

As the light transmissive fine particles, silica particles (brand name: HIPRESICA FQ manufacture by UBE NITTO KASEI CO., LTD.) having an average particle diameter of 3.0 μm and a refraction index of 1.43 was used. First, a 1 wt% aqueous dispersant solution of these light transmissive fine particles was prepared and the aqueous dispersant solution was applied onto the graft film by using rod bar #20, and then dried at room temperature. Then, excess light transmissive fine particles were rinsed off under running water so as to form a single particle layer composed of the light transmissive fine particles on the support surface.

The surface of the obtained member was observed under a transmission electron microscope (JEOL JEM-200CX) at a magnifying power of 6,000 and it was found that fine particles were arrayed regularly in a single layer.

(Formation of the light transmissive resin layer)

Next, paint was prepared by diluting UV hardenable resin (brand name: ARONIX UV-3300 manufactured by Toagosei Co., Ltd. having a refraction index of 1.51 after being hardened) with MIBK (methyl isobutyl ketone). This paint was coated on the obtained single particle layer with a blade coater in such a manner as to be 11 μm thick after being dried, dried for 2 minutes at 100°C, and hardened by ultraviolet irradiation so as to form a transparent resin layer. This resulted in the optical film of Example 1.

[Comparative Example 1]

In Comparative Example 1, light transmissive fine particles were arrayed in the same manner as in Example 1 except that no hydrophilic surface was formed. An observation of the surface of the member under a transmission electron microscope (JEOL JEM-200CX) at a magnifying power of 6,000 revealed that the fine particles were sparsity arrayed, which is far from a regular array. There are also some regions where fine particles were adsorbed in multi layers.

A light transmissive resin layer was formed by the same method as in Example 1 on the support provided with the aforementioned particle layer, which resulted in the optical film of Comparative Example 1.

[Evaluation]

(Optical properties tests)

The optical films of Example 1 and Comparative Example 1 were cut into pieces of 60 mm × 80 mm. The five spots of the four corners and center of each piece were exposed to light incident from one side, to measure total light beam transmittance (%), the average value of the haze values (%), the difference between the largest and smallest values of the haze values of the 5 spots [ΔHz(%)] with NDH2000 (manufactured by Nippon Denshoku Industries Co., Ltd.). The results are show in Table 1.

[Table 1]

|  | total light beam transmission (%) | Haze value (%) | ΔHz(%) |
|---|---|---|---|
| Example 1 | 96.3 | 82.1 | 0.3 |
| Comparative Example 1 | 92.1 | 61.8 | 3.3 |

As apparent from the results shown in Table 1, the optical film of Example 1 is higher in both total light beam transmittance and haze value than the optical film of Comparative Example 1 which failed to obtain a uniform single particle layer, and smaller in variation in haze value indicating uniform light scattering properties.

As described hereinbefore, the present embodiment provides an optical film having both high light transmission properties and uniform light scattering properties, and when the optical film is used for a display in LCDs, EL, FEDs, uneven intensities are prevented so as to provide images excellent in contrast. Furthermore, the method for producing an optical film of the present embodiment enables a high-quality optical film to be produced with ease and in a large area.

**Claims**

1. A thin film laminated with a single particle layer comprising:

   a support having a surface where a hydrophilic graft polymer chain is present; and
   a single particle layer composed of fine particles adhered to the support in a single particle state.

2. A thin film laminated with a single particle layer of claim 1, wherein one terminal of the hydrophilic graft polymer chain is directly bonded with the surface of the support and a graft chain part showing hydrophilicity is substantially free without being cross-linked.

3. A thin film laminated with a single particle layer of claim 2 further comprising an intermediate layer formed on the surface of the support, wherein the one terminal of the hydrophilic graft polymer chain is bonded with the intermediate layer.

4. A thin film laminated with a single particle layer of claim 1, wherein a terminal of the hydrophilic graft polymer chain is bonded with the surface of the support via a polymer cross-linked film structure, and a graft chain part showing hydrophilicity is substantially free without being cross-linked.

5. A thin film laminated with a single particle layer of claim 4 further comprising an intermediate layer formed on the surface of the support, wherein the one terminal of the hydrophilic graft polymer chain is bonded with the intermediate layer via the polymer cross-linked film structure.

6. A thin film laminated with a single particle layer of claim 1, wherein a molecular weight of the hydrophilic graft polymer chain is in a range of 500 to 5,000,000.

7. A thin film laminated with a single particle layer of claim 1, wherein a thickness of a layer forming the surface where the hydrophilic graft polymer chain is present is in a range of 0.001 to 10 $\mu$m.

8. A thin film laminated with a single particle layer of claim 1, wherein a diameter of the fine particles is in a range of 0.1 nm to 20 $\mu$m.

9. A method for producing a thin film laminated with a single particle layer, comprising the steps of:

   (a) providing a fine particle-containing liquid onto a support having a surface where a hydrophilic graft polymer chain is present; and
   (b) allowing fine particles to two-dimensionally aggregate while controlling development thickness of the fine particle-containing liquid, thereby forming a single particle layer.

10. A method for producing a thin film laminated with a single particle layer of claim 9, wherein the step (a) of providing a fine particle-containing liquid onto the support includes a step of providing the fine particle-containing liquid onto the support in such a manner that an amount of wet coating during the provision of the liquidg becomes 0.1 to 100 g/cm$^2$.

11. A method for producing a thin film laminated with a single particle layer of claim 9, wherein the step (b) of forming a single particle layer includes a step of drying the liquid film formed in the step (a) at a drying temperature of 180°C or below and a drying duration of 10 seconds to 10 hours.

12. A method for producing a thin film laminated with a single particle layer, comprising the steps of:

   (a) forming a hydrophilic layer having a hydrophilic graft polymer chain on a surface thereof on a base member;
   (b) providing a fine particle-containing liquid on the surface of the hydrophilic layer; and
   (c) allowing fine particles to two-dimensionally aggregate while controlling development thickness of the fine particle-containing liquid, thereby forming a single particle layer.

13. A method for producing a thin film laminated with a single particle layer of claim 12, wherein the step (a) of forming a hydrophilic layer includes one of a step of adhering the base member and a graft polymer by chemical bonding and a step of forming a graft polymer on the base member by polymerizing a compound having a double bond capable of being polymerized by using the base member as a starting point.

14. A method for producing a thin film laminated with a single particle layer of claim 12, wherein the step (a) of forming a hydrophilic layer includes a step of forming a graft polymer, and cross-linking the graft polymer on the base member and also bonding the graft polymer with the base member.

15. A thin film laminated with a single particle pattern layer comprising:

   a support having a surface where a hydrophilic graft polymer chain is present in a patterned manner; and
   a single particle layer composed of fine particles adhered in a single particle state in a region of the support where the hydrophilic graft polymer chain is present.

16. A method for producing a thin film laminated with a single particle pattern layer, comprising the steps of:

   (a) providing a fine particle-containing liquid onto a support having a surface where a hydrophilic graft polymer chain of patterned configuration is present; and
   (b) allowing fine particles to two-dimensionally aggregate while controlling development thickness of the fine particle-containing liquid, thereby forming a single particle layer in a region where the hydrophilic graft polymer chain is present.

17. An optical film comprising:

   a light transmissive support having a surface where a hydrophilic graft polymer chain is present;
   a single particle layer which is composed of light transmissive fine particles and is provided on the support; and
   a light transmissive resin layer provided on the single particle layer.

18. An optical film of claim 17, wherein the hydrophilic graft polymer chain is bonded with the support via an intermediate layer provided on the surface of the support.

19. An optical film of claim 18, wherein the intermediate layer contains a polymerizable compound which has excellent adhesion with the support and to which a hydrophilic graft polymer chain can be added by energy application, and a polymerization initiator which exhibits the ability to initiate polymerization of the polymerizable compound.

20. A method for producing an optical film, comprising the steps of:

   (a) providing a liquid containing light transmissive fine particles onto a light transmissive support having a surface where a hydrophilic graft polymer chain is present;
   (b) allowing the light transmissive fine particles to two-dimensionally aggregate while controlling development thickness of the liquid containing light transmissive fine particles, thereby forming a single particle layer; and
   (c) providing a light transmissive resin layer on the single particle layer.

21. A method for producing an optical film of claim 20, wherein the step (a) of providing a liquid containing light transmissive fine particles onto a light transmissive support includes a step of providing the liquid containing light transmissive fine particles onto the light transmissive support in such a manner that an amount of wet coating during the provision of the liquid becomes 0.1 to 100 g/cm$^2$.

22. A method for producing an optical film of claim 20, wherein the step (b) of forming a single particle layer includes a step of drying the liquid film formed in the step (a) at a drying temperature of 180°C or below and a drying duration of 10 seconds to 10 hours.

**European Patent Office**

# EUROPEAN SEARCH REPORT

**Application Number**

EP 04 00 6364

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | EP 1 075 942 A (FUJI PHOTO FILM CO LTD) 14 February 2001 (2001-02-14) * claims 1-7 * | 1 | B05D1/18 B05D5/06 C08F20/06 C08F2/48 C08F265/02 G02B1/11 |
| D,X | NAKAYAMA Y ET AL: "SURFACE MACROMOLECULAR MICROARCHITECTURE DESIGN: BIOCOMPATIBLE SURFACES VIA PHOTO-BLOCK-GRAFT-COPOLYMERIZATION USING N,N-DIETHYLDITHIOCARBAMATE" LANGMUIR, AMERICAN CHEMICAL SOCIETY, NEW YORK, NY, US, vol. 15, 1999, pages 5560-5566, XP002935305 ISSN: 0743-7463 * Section Results * * page 5562; figures 1,2 * | 1-5 | |
| D,X | PATENT ABSTRACTS OF JAPAN vol. 1999, no. 14, 22 December 1999 (1999-12-22) & JP 11 263819 A (JAPAN SCIENCE & TECHNOLOGY CORP), 28 September 1999 (1999-09-28) * abstract * | 1 | |
| X | US 3 485 658 A (ILER RALPH K) 23 December 1969 (1969-12-23) * column 1, lines 23-51 * * column 4, line 59 - column 5, line 13 * * column 6, lines 19-31 * * column 10, lines 2-53 * * column 12, lines 24-40 * * column 14, lines 30-65 * | 1,8-14, 16-22 | |

**TECHNICAL FIELDS SEARCHED (Int.Cl.7)**

B05D
C08F
F24J
G03F
G02B

-/--

The present search report has been drawn up for all claims

| Place of search | Date of completion of the search | Examiner |
|---|---|---|
| Munich | 18 June 2004 | Lindner, T |

# EP 1 459 810 A1

**European Patent Office**

## EUROPEAN SEARCH REPORT

Application Number

EP 04 00 6364

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 270 212 A (EXXON RESEARCH ENGINEERING CO) 8 June 1988 (1988-06-08) * page 2, column 1, line 1 - page 3, column 3, line 10 * * claims 1-12 * | 1-20 | |
| A | EP 0 541 401 A (JAPAN RES DEV CORP ; NAGAYAMA KUNIAKI (JP)) 12 May 1993 (1993-05-12) * claims; figures * | 1-15 | |
| A | EP 0 586 215 A (JAPAN RES DEV CORP) 9 March 1994 (1994-03-09) * claims; figures * | 1-15 | |
| A | EP 0 595 606 A (JAPAN RES DEV CORP) 4 May 1994 (1994-05-04) * claims; figures * | 1-15 | |
| | | | TECHNICAL FIELDS SEARCHED (Int.Cl.7) |

The present search report has been drawn up for all claims

| Place of search | Date of completion of the search | Examiner |
|---|---|---|
| Munich | 18 June 2004 | Lindner, T |

EPO FORM 1503 03.82 (P04C01)

## ANNEX TO THE EUROPEAN SEARCH REPORT
## ON EUROPEAN PATENT APPLICATION NO.

EP 04 00 6364

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2004

| Patent document cited in search report | | Publication date | Patent family member(s) | | Publication date |
|---|---|---|---|---|---|
| EP 1075942 | A | 14-02-2001 | EP | 1075942 A2 | 14-02-2001 |
| | | | JP | 2001117223 A | 27-04-2001 |
| | | | US | 6461792 B1 | 08-10-2002 |
| | | | JP | 2001228603 A | 24-08-2001 |
| JP 11263819 | A | 28-09-1999 | JP | 3422463 B2 | 30-06-2003 |
| US 3485658 | A | 23-12-1969 | NONE | | |
| EP 0270212 | A | 08-06-1988 | US | 4801476 A | 31-01-1989 |
| | | | CA | 1300442 C | 12-05-1992 |
| | | | DE | 3763960 D1 | 30-08-1990 |
| | | | EP | 0270212 A1 | 08-06-1988 |
| | | | NO | 873957 A ,B, | 25-03-1988 |
| | | | JP | 63171671 A | 15-07-1988 |
| EP 0541401 | A | 12-05-1993 | DE | 69217535 D1 | 27-03-1997 |
| | | | DE | 69217535 T2 | 25-09-1997 |
| | | | EP | 0541401 A1 | 12-05-1993 |
| | | | JP | 2828374 B2 | 25-11-1998 |
| | | | JP | 6277501 A | 04-10-1994 |
| | | | US | 5540951 A | 30-07-1996 |
| EP 0586215 | A | 09-03-1994 | JP | 2783487 B2 | 06-08-1998 |
| | | | JP | 6279199 A | 04-10-1994 |
| | | | JP | 2828375 B2 | 25-11-1998 |
| | | | JP | 6210158 A | 02-08-1994 |
| | | | DE | 69310057 D1 | 28-05-1997 |
| | | | DE | 69310057 T2 | 31-07-1997 |
| | | | EP | 0586215 A1 | 09-03-1994 |
| | | | US | 5437892 A | 01-08-1995 |
| EP 0595606 | A | 04-05-1994 | JP | 2885587 B2 | 26-04-1999 |
| | | | JP | 7185311 A | 25-07-1995 |
| | | | DE | 69325766 D1 | 02-09-1999 |
| | | | DE | 69325766 T2 | 10-02-2000 |
| | | | EP | 0595606 A1 | 04-05-1994 |
| | | | US | 5505996 A | 09-04-1996 |

EPO FORM P0459

For more details about this annex : see Official Journal of the European Patent Office, No. 12/82